# EUROPEAN PATENT SPECIFICATION

(11) **EP 4 316 106 B1**
(45) Date of publication and mention of the grant of the patent: **18.11.2026**
(21) Application number: 22722083.7
(22) Date of filing: 28.03.2022
(51) Int. Cl.: H04W 72/23

(54) **TRANSMISSION OF CANCELLED UPLINK CONTROL INFORMATION**
ÜBERTRAGUNG VON GELÖSCHTEN UPLINK-STEUERINFORMATIONEN
TRANSMISSION D'INFORMATIONS DE COMMANDE DE LIAISON MONTANTE ANNULÉES

(30) Priority: 30.03.2021 GR 20210100205; 05.04.2021 GR 20210100228
(43) Date of publication of application: 07.02.2024
(73) Proprietor: QUALCOMM Incorporated, San Diego, CA 92121-1714 (US)
(72) Inventor: DIMOU, Konstantinos, San Diego, California 92121-1714 (US); ZHOU, Yan, San Diego, California 92121-1714 (US); LUO, Tao, San Diego, California 92121-1714 (US)
(74) Representative: Tomkins & Co
(86) International application number: PCT/US2022/071392
(87) International publication number: WO 2022/213059

(56) References cited:
- WO-A1-2020/065893
- QUALCOMM INCORPORATED: "Uplink Inter-UE Tx Multiplexing and Prioritization", vol. RAN WG1, no. Chongqing, China; 20191014 - 20191020, 8 October 2019 (2019-10-08), XP051809292, Retrieved from the Internet <URL:https://ftp.3gpp.org/tsg_ran/WG1_RL1/TSGR1_98b/Docs/R1-1911122.zip R1-1911122 Uplink inter-UE Tx Multiplexing and Prioritization.docx> [retrieved on 20191008]

## Description

### FIELD OF THE DISCLOSURE

Aspects of the present disclosure generally relate to wireless communication and to methods and apparatuses for transmission of cancelled uplink control information.

### BACKGROUND

Wireless communication systems are widely deployed to provide various telecommunication services such as telephony, video, data, messaging, and broadcasts. Typical wireless communication systems may employ multiple-access technologies capable of supporting communication with multiple users by sharing available system resources (e.g., bandwidth, transmit power, or the like). Examples of such multiple-access technologies include code division multiple access (CDMA) systems, time division multiple access (TDMA) systems, frequency division multiple access (FDMA) systems, orthogonal frequency division multiple access (OFDMA) systems, single-carrier frequency division multiple access (SC-FDMA) systems, time division synchronous code division multiple access (TD-SCDMA) systems, and Long Term Evolution (LTE). LTE/LTE-Advanced is a set of enhancements to the Universal Mobile Telecommunications System (UMTS) mobile standard promulgated by the Third Generation Partnership Project (3GPP).

A wireless network may include one or more base stations that support communication for a user equipment (UE) or multiple UEs. A UE may communicate with a base station via downlink communications and uplink communications. "Downlink" (or "DL") refers to a communication link from the base station to the UE, and "uplink" (or "UL") refers to a communication link from the UE to the base station.

The above multiple access technologies have been adopted in various telecommunication standards to provide a common protocol that enables different UEs to communicate on a municipal, national, regional, and/or global level. New Radio (NR), which may be referred to as 5G, is a set of enhancements to the LTE mobile standard promulgated by the 3GPP. NR is designed to better support mobile broadband internet access by improving spectral efficiency, lowering costs, improving services, making use of new spectrum, and better integrating with other open standards using orthogonal frequency division multiplexing (OFDM) with a cyclic prefix (CP) (CP-OFDM) on the downlink, using CP-OFDM and/or single-carrier frequency division multiplexing (SC-FDM) (also known as discrete Fourier transform spread OFDM (DFT-s-OFDM)) on the uplink, as well as supporting beamforming, multiple-input multiple-output (MIMO) antenna technology, and carrier aggregation. As the demand for mobile broadband access continues to increase, further improvements in LTE, NR, and other radio access technologies remain useful.
WO 2020/065893 A1 discloses a user terminal comprising: a reception unit for receiving first downlink control information; and a control unit for controlling, on the basis of the first downlink control information, the stopping of uplink transmission in which there are used at least some of time and frequency domain resources determined on the basis of second downlink control information received before the first downlink control information or on the basis of an upper layer parameter.

### SUMMARY

The invention is defined in the independent claims, to which reference should now be made. Advantageous embodiments are set out in the dependent claims.

In some aspects, a method of wireless communication performed by a user equipment (UE) includes cancelling an uplink data communication that is to be multiplexed with uplink control information (UCI); determining whether to transmit the UCI using automatic transmission of cancelled UCI or in response to downlink control information (DCI) that instructs the UE to transmit cancelled UCI, wherein determining whether to transmit the UCI using automatic transmission of cancelled UCI or in response to the DCI comprises: determining that automatic transmission of cancelled UCI is configured for the UE; determining whether a next uplink data communication or a next uplink control communication has sufficient resources for transmission of the UCI; and determining to transmit the UCI using automatic transmission of cancelled UCI based at least in part on determining that automatic transmission of cancelled UCI is configured for the UE and the determination of whether the next uplink data communication or the next uplink control communication has sufficient resources for transmission of the UCI; and transmitting the UCI based at least in part on the determination.

In some aspects, a method of wireless communication performed by a network entity includes transmitting a cancellation indication instructing a UE to cancel an uplink data communication, wherein the uplink data communication is to be multiplexed with UCI; determining whether the UE is to transmit the UCI using automatic transmission of cancelled UCI or in response to DCI that instructs the UE to transmit cancelled UCI, wherein determining whether the UE is to transmit the UCI using automatic transmission of cancelled UCI or in response to the DCI comprises: determining that automatic transmission of cancelled UCI is configured for the UE; determining whether a next uplink data communication or a next uplink control communication associated with the UE has sufficient resources for transmission of the UCI; and determining that the UE is to transmit the UCI using automatic transmission of cancelled UCI based at least in part on determining that automatic transmission of cancelled UCI is configured for the UE and the determination of whether the next uplink data communication or the next uplink control communication associated with the UE has sufficient resources for transmission of the UCI; and monitoring for the UCI based at least in part on the determination.

In some aspects, an apparatus for wireless communication includes means for canceling an uplink data communication that is to be multiplexed with UCI; means for determining whether to transmit the UCI using automatic transmission of cancelled UCI or in response to DCI that instructs the apparatus to transmit cancelled UCI, wherein the means for determining whether to transmit the UCI using automatic transmission of cancelled UCI or in response to the DCI comprises: means for determining that automatic transmission of cancelled UCI is configured for the UE; means for determining whether a next uplink data communication or a next uplink control communication has sufficient resources for transmission of the UCI; and means for determining to transmit the UCI using automatic transmission of cancelled UCI based at least in part on determining that automatic transmission of cancelled UCI is configured for the UE and the determination of whether the next uplink data communication or the next uplink control communication has sufficient resources for transmission of the UCI; and means for transmitting the UCI based at least in part on the determination.

In some aspects, an apparatus for wireless communication includes means for transmitting a cancellation indication instructing a UE to cancel an uplink data communication, wherein the uplink data communication is to be multiplexed with UCI; means for determining whether the UE is to transmit the UCI using automatic transmission of cancelled UCI or in response to DCI that instructs the UE to transmit cancelled UCI, wherein the means for determining whether the UE is to transmit the UCI using automatic transmission of cancelled UCI or in response to the DCI comprises: means for determining that automatic transmission of cancelled UCI is configured for the UE; means for determining whether a next uplink data communication or a next uplink control communication associated with the UE has sufficient resources for transmission of the UCI; and means for determining that the UE is to transmit the UCI using automatic transmission of cancelled UCI based at least in part on determining that automatic transmission of cancelled UCI is configured for the UE and the determination of whether the next uplink data communication or the next uplink control communication associated with the UE has sufficient resources for transmission of the UCI; and means for monitoring for the UCI based at least in part on the determination.

The foregoing has outlined rather broadly the features and technical advantages of examples according to the disclosure in order that the detailed description that follows may be better understood. Additional features and advantages will be described hereinafter. The conception and specific examples disclosed may be readily utilized as a basis for modifying or designing other structures for carrying out the same purposes of the present disclosure. Such equivalent constructions do not depart from the scope of the appended claims. Characteristics of the concepts disclosed herein, both their organization and method of operation, together with
associated advantages, will be better understood from the following description when considered in connection with the accompanying figures. Each of the figures is provided for the purposes of illustration and description, and not as a definition of the limits of the claims.

While aspects are described in the present disclosure by illustration to some examples, those skilled in the art will understand that such aspects may be implemented in many different arrangements and scenarios. Techniques described herein may be implemented using different platform types, devices, systems, shapes, sizes, and/or packaging arrangements. For example, some aspects may be implemented via integrated chip embodiments or other non-module-component based devices (e.g., end-user devices, vehicles, communication devices, computing devices, industrial equipment, retail/purchasing devices, medical devices, and/or artificial intelligence devices). Aspects may be implemented in chip-level components, modular components, non-modular components, non-chip-level components, device-level components, and/or system-level components. Devices incorporating described aspects and features may include additional components and features for implementation and practice of claimed and described aspects. For example, transmission and reception of wireless signals may include one or more components for analog and digital purposes (e.g., hardware components including antennas, radio frequency (RF) chains, power amplifiers, modulators, buffers, processors, interleavers, adders, and/or summers). It is intended that aspects described herein may be practiced in a wide variety of devices, components, systems, distributed arrangements, and/or end-user devices of varying size, shape, and constitution.

### BRIEF DESCRIPTION OF THE DRAWINGS

So that the above-recited features of the present disclosure can be understood in detail, a more particular description, briefly summarized above, may be had by reference to aspects, some of which are illustrated in the appended drawings. It is to be noted, however, that the appended drawings illustrate only certain typical aspects of this disclosure and are therefore not to be considered limiting of its scope, for the description may admit to other equally effective aspects. The same reference numbers in different drawings may identify the same or similar elements.
Fig. 1 is a diagram illustrating an example of a wireless network, in accordance with the present disclosure.
Fig. 2 is a diagram illustrating an example of a base station in communication with a user equipment (UE) in a wireless network, in accordance with the present disclosure.
Figs. 3-8 are diagrams illustrating examples associated with transmission of cancelled uplink control information, in accordance with the present disclosure.
Figs. 9-10 are diagrams illustrating example processes associated with transmission of cancelled uplink control information, in accordance with the present disclosure.
Figs. 11-12 are block diagrams of example apparatuses for wireless communication, in accordance with the present disclosure.
Fig. 13 is a diagram illustrating an example disaggregated base station architecture, in accordance with the present disclosure.

### DETAILED DESCRIPTION

Various aspects of the disclosure are described more fully hereinafter with reference to the accompanying drawings. This disclosure may, however, be embodied in many different forms and should not be construed as limited to any specific structure or function presented throughout this disclosure. Rather, these aspects are provided so that this disclosure will be thorough and complete, and will fully convey the scope of the disclosure to those skilled in the art. One skilled in the art should appreciate that the scope of the disclosure is intended to cover any aspect of the disclosure disclosed herein, whether implemented independently of or combined with any other aspect of the disclosure. For example, an apparatus may be implemented or a method may be practiced using any number of the aspects set forth herein. In addition, the scope of the disclosure is intended to cover such an apparatus or method which is practiced using other structure, functionality, or structure and functionality in addition to or other than the various aspects of the disclosure set forth herein. It should be understood that any aspect of the disclosure disclosed herein may be embodied by one or more elements of a claim.

Several aspects of telecommunication systems will now be presented with reference to various apparatuses and techniques. These apparatuses and techniques will be described in the following detailed description and illustrated in the accompanying drawings by various blocks, modules, components, circuits, steps, processes, algorithms, or the like (collectively referred to as "elements"). These elements may be implemented using hardware, software, or combinations thereof. Whether such elements are implemented as hardware or software depends upon the particular application and design constraints imposed on the overall system.

While aspects may be described herein using terminology commonly associated with a 5G or New Radio (NR) radio access technology (RAT), aspects of the present disclosure can be applied to other RATs, such as a 3G RAT, a 4G RAT, and/or a RAT subsequent to 5G (e.g., 6G).

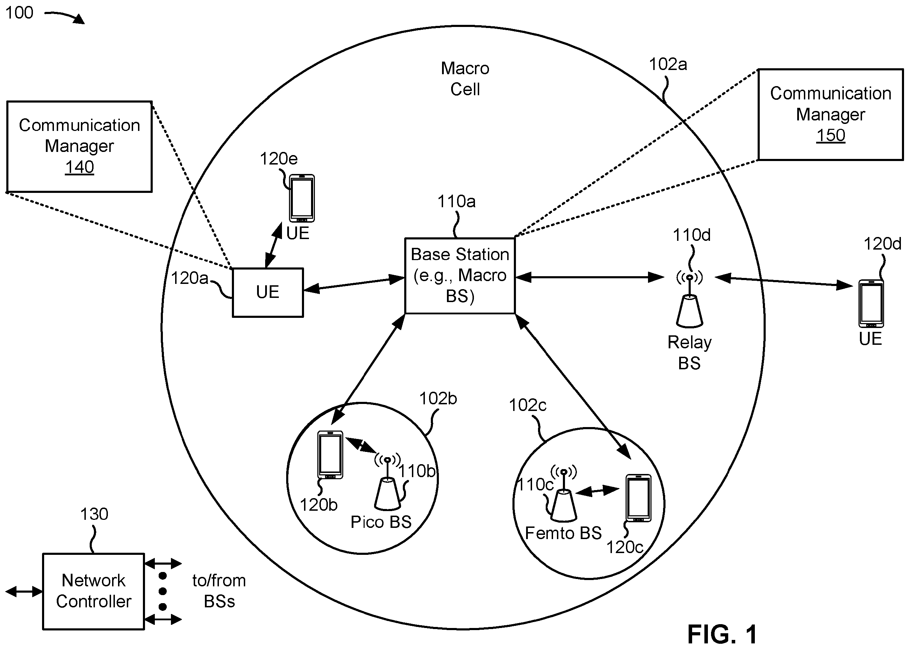

Fig. 1 is a diagram illustrating an example of a wireless network 100, in accordance with the present disclosure. The wireless network 100 may be or may include elements of a 5G (e.g., NR) network and/or a 4G (e.g., Long Term Evolution (LTE)) network, among other examples. The wireless network 100 may include one or more base stations 110 (shown as a BS 110a, a BS 110b, a BS 110c, and a BS 110d), a user equipment (UE) 120 or multiple UEs 120 (shown as a UE 120a, a UE 120b, a UE 120c, a UE 120d, and a UE 120e), and/or other network entities. A base station 110 is an entity that communicates with UEs 120. A base station 110 (sometimes referred to as a BS) may include, for example, an NR base station, an LTE base station, a Node B, an eNB (e.g., in 4G), a gNB (e.g., in 5G), an access point, and/or a transmission reception point (TRP). Each base station 110 may provide communication coverage for a particular geographic area. In the Third Generation Partnership Project (3GPP), the term "cell" can refer to a coverage area of a base station 110 and/or a base station subsystem serving this coverage area, depending on the context in which the term is used.

A base station 110 may provide communication coverage for a macro cell, a pico cell, a femto cell, and/or another type of cell. A macro cell may cover a relatively large geographic area (e.g., several kilometers in radius) and may allow unrestricted access by UEs 120 with service subscriptions. A pico cell may cover a relatively small geographic area and may allow unrestricted access by UEs 120 with service subscription. A femto cell may cover a relatively small geographic area (e.g., a home) and may allow restricted access by UEs 120 having association with the femto cell (e.g., UEs 120 in a closed subscriber group (CSG)). A base station 110 for a macro cell may be referred to as a macro base station. A base station 110 for a pico cell may be referred to as a pico base station. A base station 110 for a femto cell may be referred to as a femto base station or an in-home base station. In the example shown in Fig. 1, the BS 110a may be a macro base station for a macro cell 102a, the BS 110b may be a pico base station for a pico cell 102b, and the BS 110c may be a femto base station for a femto cell 102c. A base station may support one or multiple (e.g., three) cells.

In some aspects, the term "base station" (e.g., the base station 110) or "network entity" may refer to an aggregated base station, a disaggregated base station, an integrated access and backhaul (IAB) node, a relay node, and/or one or more components thereof. For example, in some aspects, "base station" or "network entity" may refer to a central unit (CU), a distributed unit (DU), a radio unit (RU), a Near-Real Time (Near-RT) RAN Intelligent Controller (RIC), or a Non-Real Time (Non-RT) RIC, or a combination thereof. In some aspects, the term "base station" or "network entity" may refer to one device configured to perform one or more functions, such as those described herein in connection with the base station 110. In some aspects, the term "base station" or "network entity" may refer to a plurality of devices configured to perform the one or more functions. For example, in some distributed systems, each of a number of different devices (which may be located in the same geographic location or in different geographic locations) may be configured to perform at least a portion of a function, or to duplicate performance of at least a portion of the function, and the term "base station" or "network entity" may refer to any one or more of those different devices. In some aspects, the term "base station" or "network entity" may refer to one or more virtual base stations and/or one or more virtual base station functions. For example, in some aspects, two or more base station functions may be instantiated on a single device. In some aspects, the term "base station" or "network entity" may refer to one of the base station functions and not another. In this way, a single device may include more than one base station.

In some examples, a cell may not necessarily be stationary, and the geographic area of the cell may move according to the location of a base station 110 that is mobile (e.g., a mobile base station). In some examples, the base stations 110 may be interconnected to one another and/or to one or more other base stations 110 or network nodes (not shown) in the wireless network 100 through various types of backhaul interfaces, such as a direct physical connection or a virtual network, using any suitable transport network.

The wireless network 100 may include one or more relay stations. A relay station is an entity that can receive a transmission of data from an upstream station (e.g., a base station 110 or a UE 120) and send a transmission of the data to a downstream station (e.g., a UE 120 or a base station 110). A relay station may be a UE 120 that can relay transmissions for other UEs 120. In the example shown in Fig. 1, the BS 110d (e.g., a relay base station) may communicate with the BS 110a (e.g., a macro base station) and the UE 120d in order to facilitate communication between the BS 110a and the UE 120d. A base station 110 that relays communications may be referred to as a relay station, a relay base station, a relay, or the like.

The wireless network 100 may be a heterogeneous network that includes base stations 110 of different types, such as macro base stations, pico base stations, femto base stations, relay base stations, or the like. These different types of base stations 110 may have different transmit power levels, different coverage areas, and/or different impacts on interference in the wireless network 100. For example, macro base stations may have a high transmit power level (e.g., 5 to 40 watts) whereas pico base stations, femto base stations, and relay base stations may have lower transmit power levels (e.g., 0.1 to 2 watts).

A network controller 130 may couple to or communicate with a set of base stations 110 and may provide coordination and control for these base stations 110. The network controller 130 may communicate with the base stations 110 via a backhaul communication link. The base stations 110 may communicate with one another directly or indirectly via a wireless or wireline backhaul communication link.

The UEs 120 may be dispersed throughout the wireless network 100, and each UE 120 may be stationary or mobile. A UE 120 may include, for example, an access terminal, a terminal, a mobile station, and/or a subscriber unit. A UE 120 may be a cellular phone (e.g., a smart phone), a personal digital assistant (PDA), a wireless modem, a wireless communication device, a handheld device, a laptop computer, a cordless phone, a wireless local loop (WLL) station, a tablet, a camera, a gaming device, a netbook, a smartbook, an ultrabook, a medical device, a biometric device, a wearable device (e.g., a smart watch, smart clothing, smart glasses, a smart wristband, smart jewelry (e.g., a smart ring or a smart bracelet)), an entertainment device (e.g., a music device, a video device, and/or a satellite radio), a vehicular component or sensor, a smart meter/sensor, industrial manufacturing equipment, a global positioning system device, and/or any other suitable device that is configured to communicate via a wireless medium.

Some UEs 120 may be considered machine-type communication (MTC) or evolved or enhanced machine-type communication (eMTC) UEs. An MTC UE and/or an eMTC UE may include, for example, a robot, a drone, a remote device, a sensor, a meter, a monitor, and/or a location tag, that may communicate with a base station, another device (e.g., a remote device), or some other entity. Some UEs 120 may be considered Internet-of-Things (IoT) devices, and/or may be implemented as NB-IoT (narrowband IoT) devices. Some UEs 120 may be considered a Customer Premises Equipment. A UE 120 may be included inside a housing that houses components of the UE 120, such as processor components and/or memory components. In some examples, the processor components and the memory components may be coupled together. For example, the processor components (e.g., one or more processors) and the memory components (e.g., a memory) may be operatively coupled, communicatively coupled, electronically coupled, and/or electrically coupled.

In general, any number of wireless networks 100 may be deployed in a given geographic area. Each wireless network 100 may support a particular RAT and may operate on one or more frequencies. A RAT may be referred to as a radio technology, an air interface, or the like. A frequency may be referred to as a carrier, a frequency channel, or the like. Each frequency may support a single RAT in a given geographic area in order to avoid interference between wireless networks of different RATs. In some cases, NR or 5G RAT networks may be deployed.

In some examples, two or more UEs 120 (e.g., shown as UE 120a and UE 120e) may communicate directly using one or more side link channels (e.g., without using a base station 110 as an intermediary to communicate with one another). For example, the UEs 120 may communicate using peer-to-peer (P2P) communications, device-to-device (D2D) communications, a vehicle-to-everything (V2X) protocol (e.g., which may include a vehicle-to-vehicle (V2V) protocol, a vehicle-to-infrastructure (V2I) protocol, or a vehicle-to-pedestrian (V2P) protocol), and/or a mesh network. In such examples, a UE 120 may perform scheduling operations, resource selection operations, and/or other operations described elsewhere herein as being performed by the base station 110.

Devices of the wireless network 100 may communicate using the electromagnetic spectrum, which may be subdivided by frequency or wavelength into various classes, bands, channels, or the like. For example, devices of the wireless network 100 may communicate using one or more operating bands. In 5G NR, two initial operating bands have been identified as frequency range designations FR1 (410 MHz - 7.125 GHz) and FR2 (24.25 GHz - 52.6 GHz). It should be understood that although a portion of FR1 is greater than 6 GHz, FR1 is often referred to (interchangeably) as a "Sub-6 GHz" band in various documents and articles. A similar nomenclature issue sometimes occurs with regard to FR2, which is often referred to (interchangeably) as a "millimeter wave" band in documents and articles, despite being different from the extremely high frequency (EHF) band (30 GHz - 300 GHz) which is identified by the International Telecommunications Union (ITU) as a "millimeter wave" band.

The frequencies between FR1 and FR2 are often referred to as mid-band frequencies. Recent 5G NR studies have identified an operating band for these mid-band frequencies as frequency range designation FR3 (7.125 GHz - 24.25 GHz). Frequency bands falling within FR3 may inherit FR1 characteristics and/or FR2 characteristics, and thus may effectively extend features of FR1 and/or FR2 into mid-band frequencies. In addition, higher frequency bands are currently being explored to extend 5G NR operation beyond 52.6 GHz. For example, three higher operating bands have been identified as frequency range designations FR4a or FR4-1 (52.6 GHz - 71 GHz), FR4 (52.6 GHz - 114.25 GHz), and FR5 (114.25 GHz - 300 GHz). Each of these higher frequency bands falls within the EHF band.

With the above examples in mind, unless specifically stated otherwise, it should be understood that the term "sub-6 GHz" or the like, if used herein, may broadly represent frequencies that may be less than 6 GHz, may be within FR1, or may include mid-band frequencies. Further, unless specifically stated otherwise, it should be understood that the term "millimeter wave" or the like, if used herein, may broadly represent frequencies that may include mid-band frequencies, may be within FR2, FR4, FR4-a or FR4-1, and/or FR5, or may be within the EHF band. It is contemplated that the frequencies included in these operating bands (e.g., FR1, FR2, FR3, FR4, FR4-a, FR4-1, and/or FR5) may be modified, and techniques described herein are applicable to those modified frequency ranges.

In some aspects, the UE 120 may include a communication manager 140. As described in more detail elsewhere herein, the communication manager 140 may cancel an uplink data communication that is to be multiplexed with uplink control information (UCI); determine whether to transmit the UCI using automatic transmission of cancelled UCI or in response to downlink control information (DCI) that instructs the UE to transmit cancelled UCI; and transmit the UCI based at least in part on the determination. Additionally, or alternatively, the communication manager 140 may perform one or more other operations described herein.

In some aspects, the base station 110 may include a communication manager 150. As described in more detail elsewhere herein, the communication manager 150 may transmit a cancellation indication instructing a UE to cancel an uplink data communication, wherein the uplink data communication is to be multiplexed with UCI; determine whether the UE is to transmit the UCI using automatic transmission of cancelled UCI or in response to DCI that instructs the UE to transmit cancelled UCI; and monitor for the UCI based at least in part on the determination. Additionally, or alternatively, the communication manager 150 may perform one or more other operations described herein.

As indicated above, Fig. 1 is provided as an example. Other examples may differ from what is described with regard to Fig. 1.

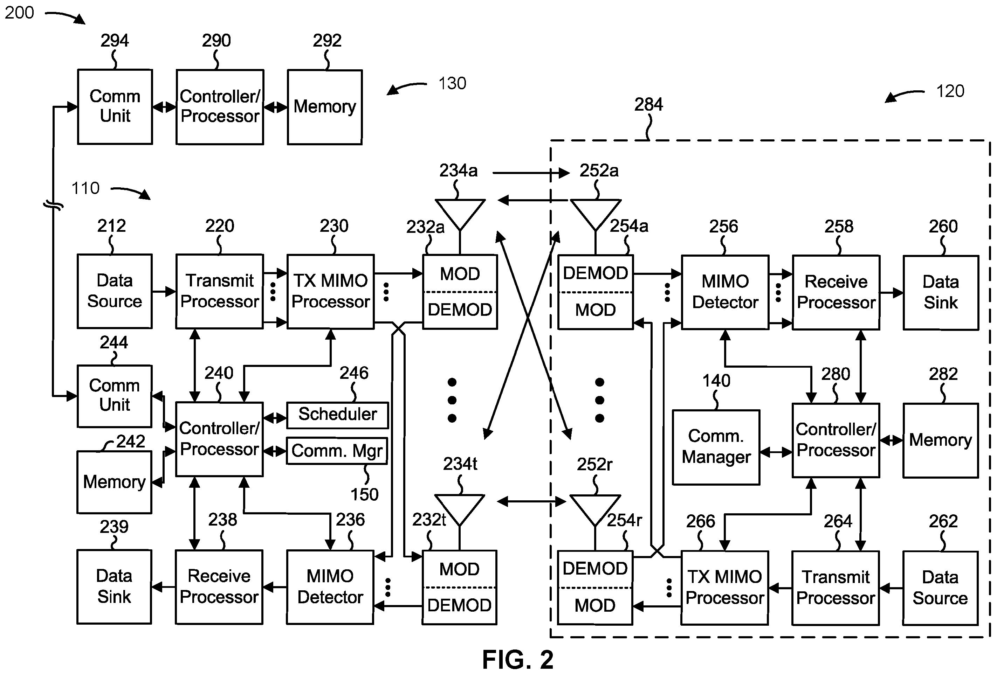

Fig. 2 is a diagram illustrating an example 200 of a base station 110 in communication with a UE 120 in a wireless network 100, in accordance with the present disclosure. The base station 110 may be equipped with a set of antennas 234a through 234t, such as *T* antennas *(T* ≥ 1). The UE 120 may be equipped with a set of antennas 252a through 252r, such as R antennas (R ≥ 1).

At the base station 110, a transmit processor 220 may receive data, from a data source 212, intended for the UE 120 (or a set of UEs 120). The transmit processor 220 may select one or more modulation and coding schemes (MCSs) for the UE 120 based at least in part on one or more channel quality indicators (CQIs) received from that UE 120. The base station 110 may process (e.g., encode and modulate) the data for the UE 120 based at least in part on the MCS(s) selected for the UE 120 and may provide data symbols for the UE 120. The transmit processor 220 may process system information (e.g., for semi-static resource partitioning information (SRPI)) and control information (e.g., CQI requests, grants, and/or upper layer signaling) and provide overhead symbols and control symbols. The transmit processor 220 may generate reference symbols for reference signals (e.g., a cell-specific reference signal (CRS) or a demodulation reference signal (DMRS)) and synchronization signals (e.g., a primary synchronization signal (PSS) or a secondary synchronization signal (SSS)). A transmit (TX) multiple-input multiple-output (MIMO) processor 230 may perform spatial processing (e.g., precoding) on the data symbols, the control symbols, the overhead symbols, and/or the reference symbols, if applicable, and may provide a set of output symbol streams (e.g., T output symbol streams) to a corresponding set of modems 232 (e.g., Tmodems), shown as modems 232a through 232t. For example, each output symbol stream may be provided to a modulator component (shown as MOD) of a modem 232. Each modem 232 may use a respective modulator component to process a respective output symbol stream (e.g., for OFDM) to obtain an output sample stream. Each modem 232 may further use a respective modulator component to process (e.g., convert to analog, amplify, filter, and/or upconvert) the output sample stream to obtain a downlink signal. The modems 232a through 232t may transmit a set of downlink signals (e.g., T downlink signals) via a corresponding set of antennas 234 (e.g., T antennas), shown as antennas 234a through 234t.

At the UE 120, a set of antennas 252 (shown as antennas 252a through 252r) may receive the downlink signals from the base station 110 and/or other base stations 110 and may provide a set of received signals (e.g., R received signals) to a set of modems 254 (e.g., *R* modems), shown as modems 254a through 254r. For example, each received signal may be provided to a demodulator component (shown as DEMOD) of a modem 254. Each modem 254 may use a respective demodulator component to condition (e.g., filter, amplify, downconvert, and/or digitize) a received signal to obtain input samples. Each modem 254 may use a demodulator component to further process the input samples (e.g., for OFDM) to obtain received symbols. A MIMO detector 256 may obtain received symbols from the modems 254, may perform MIMO detection on the received symbols if applicable, and may provide detected symbols. A receive processor 258 may process (e.g., demodulate and decode) the detected symbols, may provide decoded data for the UE 120 to a data sink 260, and may provide decoded control information and system information to a controller/processor 280. The term "controller/processor" may refer to one or more controllers, one or more processors, or a combination thereof. A channel processor may determine a reference signal received power (RSRP) parameter, a received signal strength indicator (RSSI) parameter, a reference signal received quality (RSRQ) parameter, and/or a CQI parameter, among other examples. In some examples, one or more components of the UE 120 may be included in a housing 284.

The network controller 130 may include a communication unit 294, a controller/processor 290, and a memory 292. The network controller 130 may include, for example, one or more devices in a core network. The network controller 130 may communicate with the base station 110 via the communication unit 294.

One or more antennas (e.g., antennas 234a through 234t and/or antennas 252a through 252r) may include, or may be included within, one or more antenna panels, one or more antenna groups, one or more sets of antenna elements, and/or one or more antenna arrays, among other examples. An antenna panel, an antenna group, a set of antenna elements, and/or an antenna array may include one or more antenna elements (within a single housing or multiple housings), a set of coplanar antenna elements, a set of non-coplanar antenna elements, and/or one or more antenna elements coupled to one or more transmission and/or reception components, such as one or more components of Fig. 2.

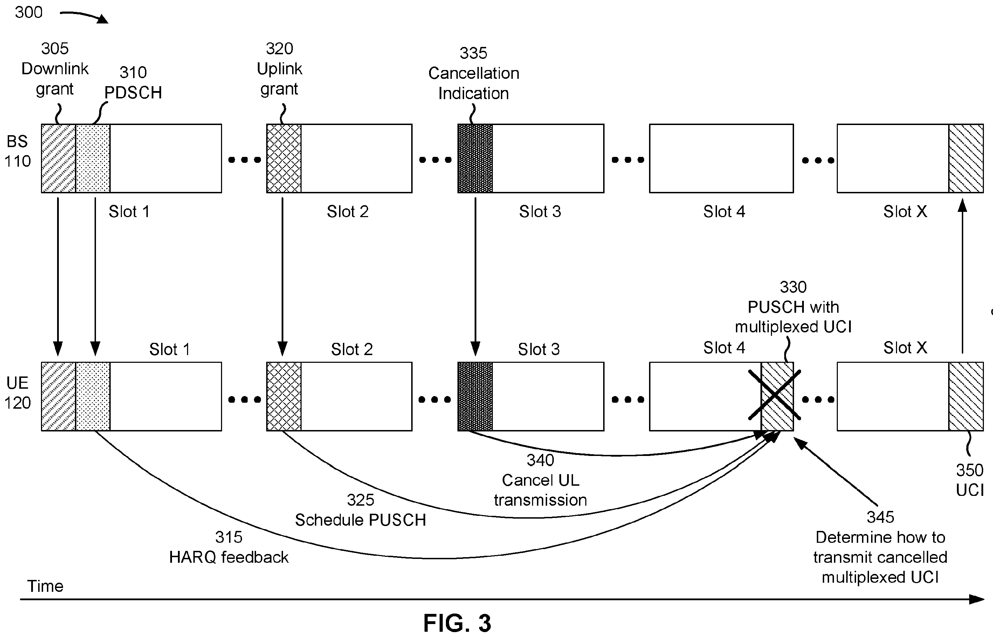

On the uplink, at the UE 120, a transmit processor 264 may receive and process data from a data source 262 and control information (e.g., for reports that include RSRP, RSSI, RSRQ, and/or CQI) from the controller/processor 280. The transmit processor 264 may generate reference symbols for one or more reference signals. The symbols from the transmit processor 264 may be precoded by a TX MIMO processor 266 if applicable, further processed by the modems 254 (e.g., for DFT-s-OFDM or CP-OFDM), and transmitted to the base station 110. In some examples, the modem 254 of the UE 120 may include a modulator and a demodulator. In some examples, the UE 120 includes a transceiver. The transceiver may include any combination of the antenna(s) 252, the modem(s) 254, the MIMO detector 256, the receive processor 258, the transmit processor 264, and/or the TX MIMO processor 266. The transceiver may be used by a processor (e.g., the controller/processor 280) and the memory 282 to perform aspects of any of the methods described herein (e.g., with reference to Figs. 3-10).

At the base station 110, the uplink signals from UE 120 and/or other UEs may be received by the antennas 234, processed by the modem 232 (e.g., a demodulator component, shown as DEMOD, of the modem 232), detected by a MIMO detector 236 if applicable, and further processed by a receive processor 238 to obtain decoded data and control information sent by the UE 120. The receive processor 238 may provide the decoded data to a data sink 239 and provide the decoded control information to the controller/processor 240. The base station 110 may include a communication unit 244 and may communicate with the network controller 130 via the communication unit 244. The base station 110 may include a scheduler 246 to schedule one or more UEs 120 for downlink and/or uplink communications. In some examples, the modem 232 of the base station 110 may include a modulator and a demodulator. In some examples, the base station 110 includes a transceiver. The transceiver may include any combination of the antenna(s) 234, the modem(s) 232, the MIMO detector 236, the receive processor 238, the transmit processor 220, and/or the TX MIMO processor 230. The transceiver may be used by a processor (e.g., the controller/processor 240) and the memory 242 to perform aspects of any of the methods described herein (e.g., with reference to Figs. 3-10).

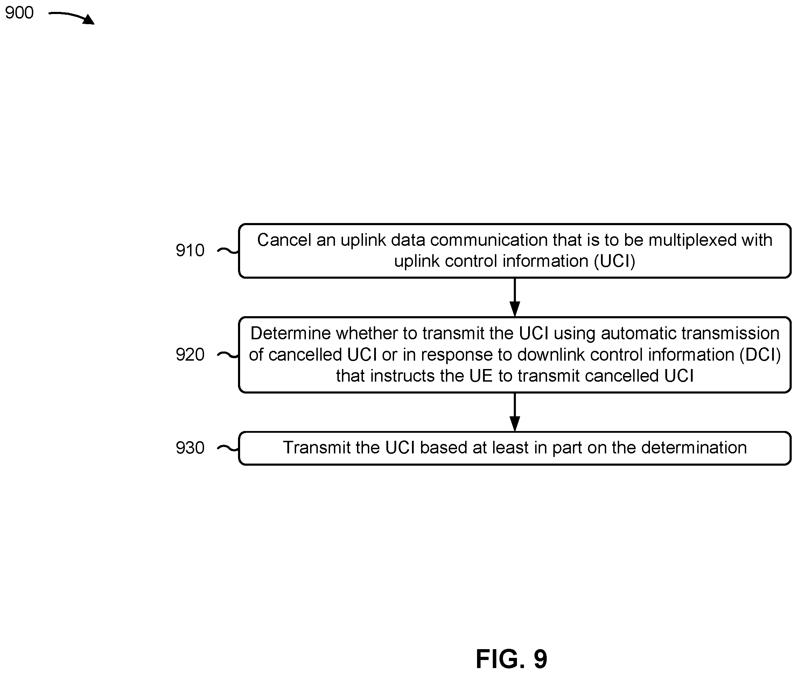

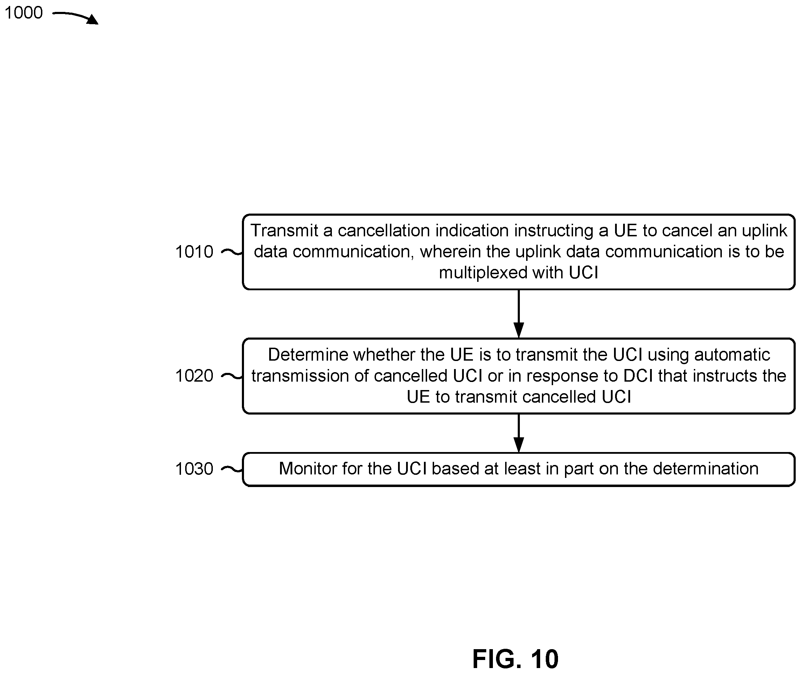

The controller/processor 240 of the base station 110, the controller/processor 280 of the UE 120, and/or any other component(s) of Fig. 2 may perform one or more techniques associated with transmission of cancelled uplink control information, as described in more detail elsewhere herein. For example, the controller/processor 240 of the base station 110, the controller/processor 280 of the UE 120, and/or any other component(s) of Fig. 2 may perform or direct operations of, for example, process 900 of Fig. 9, process 1000 of Fig. 10, and/or other processes as described herein. The memory 242 and the memory 282 may store data and program codes for the base station 110 and the UE 120, respectively. In some examples, the memory 242 and/or the memory 282 may include a non-transitory computer-readable medium storing one or more instructions (e.g., code and/or program code) for wireless communication. For example, the one or more instructions, when executed (e.g., directly, or after compiling, converting, and/or interpreting) by one or more processors of the base station 110 and/or the UE 120, may cause the one or more processors, the UE 120, and/or the base station 110 to perform or direct operations of, for example, process 900 of Fig. 9, process 1000 of Fig. 10, and/or other processes as described herein. In some examples, executing instructions may include running the instructions, converting the instructions, compiling the instructions, and/or interpreting the instructions, among other examples.

In some aspects, the UE includes means for cancelling an uplink data communication that is to be multiplexed with UCI; means for determining whether to transmit the UCI using automatic transmission of cancelled UCI or in response to DCI that instructs the UE to transmit cancelled UCI; and/or means for transmitting the UCI based at least in part on the determination. The means for the UE to perform operations described herein may include, for example, one or more of antenna 252, demodulator 254, MIMO detector 256, receive processor 258, transmit processor 264, TX MIMO processor 266, modulator 254, controller/processor 280, or memory 282.

In some aspects, the base station includes means for transmitting a cancellation indication instructing a UE to cancel an uplink data communication, wherein the uplink data communication is to be multiplexed with UCI; means for determining whether the UE is to transmit the UCI using automatic transmission of cancelled UCI or in response to DCI that instructs the UE to transmit cancelled UCI; and/or means for monitoring for the UCI based at least in part on the determination. The means for the base station to perform operations described herein may include, for example, one or more of transmit processor 220, TX MIMO processor 230, modulator 232, antenna 234, demodulator 232, MIMO detector 236, receive processor 238, controller/processor 240, memory 242, or scheduler 246.

While blocks in Fig. 2 are illustrated as distinct components, the functions described above with respect to the blocks may be implemented in a single hardware, software, or combination component or in various combinations of components. For example, the functions described with respect to the transmit processor 264, the receive processor 258, and/or the TX MIMO processor 266 may be performed by or under the control of the controller/processor 280.

As indicated above, Fig. 2 is provided as an example. Other examples may differ from what is described with regard to Fig. 2.

Fig. 3 is a diagram illustrating an example 300 associated with transmission of cancelled uplink control information, in accordance with the present disclosure. As shown in Fig. 3, a base station 110 and a UE 120 may communicate with one another.

As shown by reference number 305, the base station 110 may transmit a downlink grant to the UE 120. For example, the downlink grant may be included in DCI (e.g., DCI having DCI format 1_1). Alternatively, the downlink grant may be transmitted to the UE 120 in a radio resource control (RRC) message, such as for semi-persistent scheduling. The downlink grant may schedule a downlink data communication, such as a physical downlink shared channel (PDSCH) communication. As shown by reference number 310, the base station 110 may transmit the downlink data communication (shown as a PDSCH communication) to the UE 120. In some aspects, the downlink grant and the downlink data communication may be transmitted in the same slot (shown as Slot 1). In some aspects, the downlink grant and the downlink data communication may be transmitted in different slots.

As shown by reference number 315, the UE 120 may generate hybrid automatic repeat request (HARQ) feedback for the PDSCH communication. In some cases, HARQ feedback may be referred to as HARQ information, HARQ-acknowledgement (HARQ-ACK) feedback, HARQ-ACK information, acknowledgement/negative acknowledgment (ACK/NACK) feedback, ACK/NACK information, or the like. The HARQ feedback may include one or more bits (e.g., HARQ bits, HARQ-ACK bits, or ACK/NACK bits) that indicate whether the PDSCH communication has been successfully received (e.g., has been acknowledged) by the UE 120 or has not been successfully received (e.g., has been negatively acknowledged) by the UE 120. In some aspects, the UE 120 may transmit the HARQ feedback in UCI. In some aspects, the HARQ bits included in the UCI may all have the same priority (e.g., may be associated with one or more PDSCH communications having the same priority).

In some aspects, the base station 110 may indicate, to the UE 120 (e.g., in an RRC message and/or in the downlink grant), a time domain resource in which the HARQ feedback (e.g., the UCI) is to be transmitted by the UE 120. In other words, the base station 110 may schedule transmission of the HARQ feedback (e.g., the UCI) for the UE 120. In example 300, the UE 120 is scheduled to transmit the HARQ feedback (e.g., the UCI) in a slot shown as Slot 4.

As shown by reference number 320, the base station 110 may transmit an uplink grant to the UE 120. For example, the uplink grant may be included in DCI (e.g., DCI having DCI format 0_1). Alternatively, the uplink grant may be transmitted to the UE 120 in an RRC message, such as for configured grant uplink scheduling. As shown by reference number 325, the uplink grant may schedule an uplink data communication, such as a physical uplink shared channel (PUSCH) communication. In example 300, the PUSCH communication is scheduled in a slot shown as Slot 4. In this example, and as shown by reference number 330, the PUSCH communication is multiplexed with UCI that carries the HARQ feedback. This multiplexing of UCI with a PUSCH communication is sometimes referred to "piggybacking" the UCI on the PUSCH communication. For example, the PUSCH communication may be transmitted by the UE 120 using fewer than all of the resources (e.g., fewer than all of the resource elements (REs)) that are scheduled for the UE 120, and the UE 120 may transmit the UCI in the remaining resources (e.g., the remaining REs).

As shown by reference number 335, prior to transmitting the multiplexed PUSCH and UCI, the base station 110 may transmit a cancellation indication to the UE 120. For example, the base station 110 may transmit the cancellation indication based at least in part on a higher priority communication (than the PUSCH communication) being scheduled for the UE 120 and/or for another UE 120. In some cases, a cancellation indication may be referred to as a CI or as an uplink cancellation indication (ULCI). In some aspects, the cancellation indication may be transmitted in DCI (e.g., DCI having DCI format 2_4). The cancellation indication may cancel the PUSCH communication.

As shown by reference number 340, the UE 120 may cancel uplink transmission of the PUSCH communication (e.g., in whole or in part, such as a full PUSCH cancellation or a partial PUSCH cancellation) based at least in part on the cancellation indication. For example, the UE 120 may refrain from transmitting the scheduled PUSCH communication and/or the base station 110 may refrain from monitoring for the scheduled PUSCH communication based at least in part on the cancellation indication. Because the UCI is scheduled to be multiplexed with the scheduled PUSCH communication, the cancellation indication may also cancel transmission of the UCI. As a result, the UE 120 may refrain from multiplexing and transmitting the UCI with the PUSCH communication and/or the base station 110 may refrain from monitoring for the UCI to be multiplexed with the PUSCH communication based at least in part on the cancellation indication.

If the UCI is not transmitted by the UE 120, then the base station 110 may not receive information regarding whether one or more PDSCH communications were successfully received by the UE 120. This may reduce reliability if the base station 110 does not retransmit a PDSCH communication that was not successfully received by the UE 120. Furthermore, this may increase network overhead and network resource usage if the base station 110 retransmits a PDSCH communication that was successfully received by the UE 120. Some techniques and apparatuses described herein improve reliability and reduce network overhead and network resource usage by enabling the UE 120 to transmit UCI that was cancelled due to a cancellation indication (e.g., that cancels a PUSCH communication with which the UCI was to be multiplexed).

For example, as shown by reference number 345, the UE 120 may determine a manner in which the cancelled UCI is to be transmitted to the base station 110. In some aspects, the UE 120 may use automatic transmission of cancelled UCI to transmit the UCI with a next uplink data communication (e.g., a next PUSCH communication scheduled by a dedicated uplink grant, or a next PUSCH communication scheduled by a configured grant) or with a next uplink control communication (e.g., a next physical uplink control channel (PUCCH) communication) for which the UE 120 has sufficient time to prepare for transmission of the cancelled UCI. Using automatic transmission of cancelled UCI, the UE 120 need not receive DCI instructing the UE 120 to transmit the cancelled UCI. Alternatively, the UE 120 may transmit the cancelled UCI in response to DCI that instructs the UE 120 to transmit the cancelled UCI. Additional details are described elsewhere herein.

In some aspects, the UE 120 may determine whether to transmit the UCI using automatic transmission of cancelled UCI or in response to DCI instructing the UE 120 to transmit the cancelled UCI. As shown by reference number 350, the UE 120 may transmit the UCI (e.g., that was previously cancelled) to the base station 110 (e.g., according to the determination). As a result, the UE 120 may improve reliability and reduce network overhead and network resource usage by enabling the UE 120 to transmit UCI that was cancelled due to a cancellation indication (e.g., that cancels a PUSCH communication with which the UCI was to be multiplexed).

As indicated above, Fig. 3 is provided as an example. Other examples may differ from what is described with regard to Fig. 3.

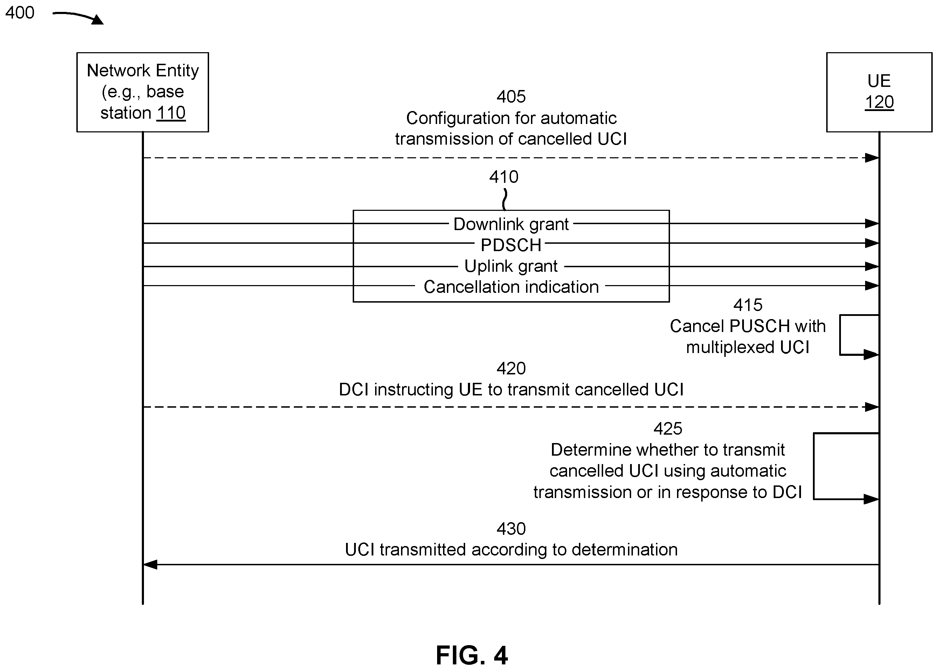

Fig. 4 is a diagram illustrating an example 400 associated with transmission of cancelled uplink control information, in accordance with the present disclosure. As shown in Fig. 4, a network entity (e.g., base station 110) and a UE 120 may communicate with one another.

As shown by reference number 405, in some aspects, the network entity may transmit, and the UE 120 may receive, a configuration for automatic transmission of cancelled UCI. The configuration may be transmitted in a configuration message, such as an RRC message (e.g., an RRC configuration message or an RRC reconfiguration message) or a medium access control (MAC) control element (CE) (collectively, MAC-CE). In some aspects, the UE 120 is not configured for automatic transmission of cancelled UCI (as indicated by the dashed line in Fig. 4), and the configuration message may exclude a configuration for automatic transmission of cancelled UCI (or the configuration message may not be transmitted by the network entity). In some aspects, the UE 120 is configured with both a configuration for automatic transmission of cancelled UCI and a configuration for DCI instructing the UE 120 to transmit cancelled UCI.

When the UE 120 is configured with automatic transmission of cancelled UCI and receives a cancellation indication that cancels a UCI transmission (e.g., for UCI that is multiplexed with a PUSCH communication), the UE 120 may transmit the UCI in an uplink communication that occurs after a time at which the UCI transmission was scheduled to occur. The uplink communication may be an uplink communication other than an uplink reference signal. For example, the uplink communication may be an uplink data communication (e.g., a PUSCH communication) or an uplink control communication (e.g., a PUCCH communication). In some aspects, the UE 120 may transmit the UCI in a next uplink data communication or a next uplink control communication that occurs after the time at which the cancelled UCI transmission was scheduled (e.g., with no intervening uplink data communication or uplink control communications). Using automatic transmission of cancelled UCI, the UE 120 need not receive DCI instructing the UE 120 to transmit the cancelled UCI, thereby conserving network resources.

As shown by reference number 410, the network entity may transmit, and the UE 120 may receive, a downlink grant that schedules a PDSCH communication, the PDSCH communication scheduled by the downlink grant, an uplink grant that schedules a PUSCH communication, and a cancellation indication. Additional details are described above in connection with Fig. 3. In some aspects, the UE 120 may be configured to, may be scheduled to, or may determine to multiplex UCI, corresponding to the PDSCH communication (e.g., one or more HARQ bits indicating whether the PDSCH communication was successfully received by the UE 120), and the PUSCH communication. In some aspects, the HARQ bits included in the UCI may have a same priority. As shown by reference number 415, the UE 120 may cancel transmission of the PUSCH communication and the UCI based at least in part on the cancellation indication, as described in more detail above in connection with Fig. 3.

As shown by reference number 420, in some aspects, the network entity may transmit, and the UE 120 may receive, DCI (e.g., having DCI format 2_4) instructing the UE 120 to transmit the cancelled UCI. In some aspects, the DCI may indicate one or more resources (e.g., time domain resources, frequency domain resources, and/or spatial domain resources) in which the UE 120 is to transmit the UCI. Additionally, or alternatively, the DCI may indicate one or more HARQ bits to be transmitted by the UE 120 in the UCI. In some aspects, the network entity may not transmit the DCI instructing the UE 120 to transmit the cancelled UCI (as indicated by the dashed line in Fig. 4), such as when the UE 120 is configured for automatic transmission of cancelled UCI.

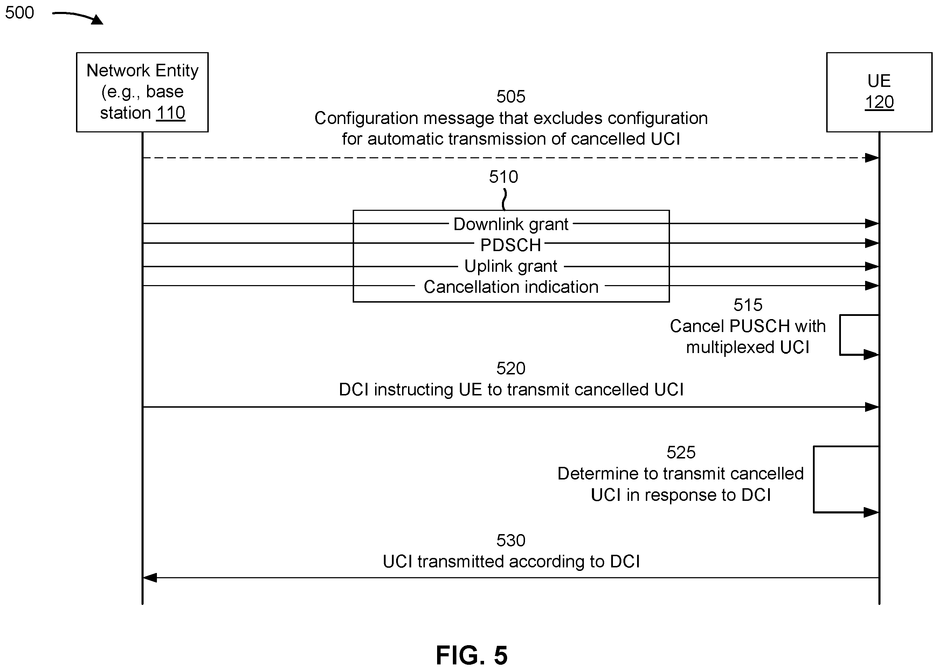

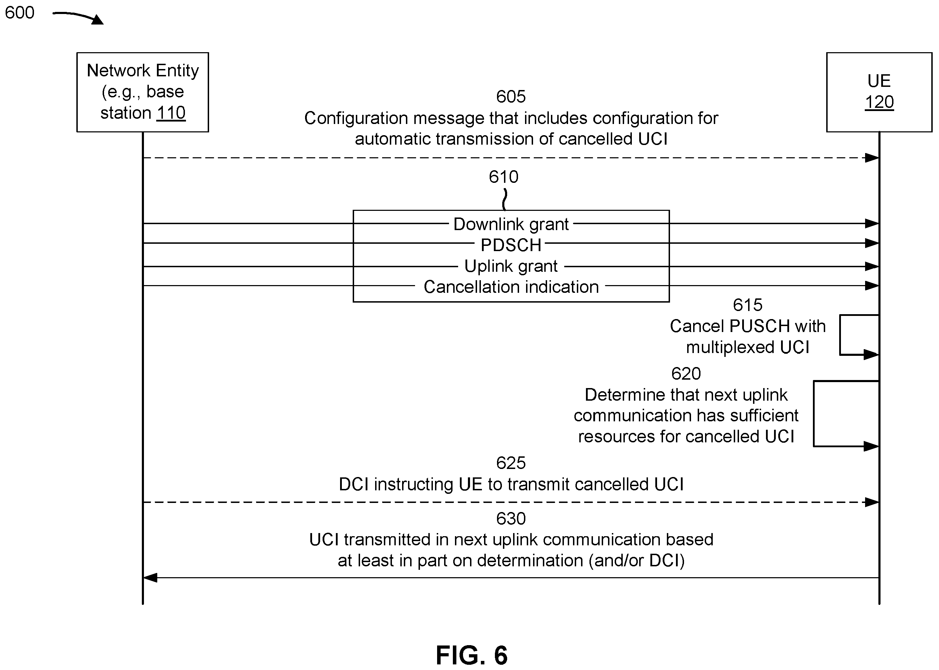

As shown by reference number 425, the UE 120 determines whether to transmit the UCI (e.g., the cancelled UCI) using automatic transmission of cancelled UCI or in response to DCI that instructs the UE 120 to transmit cancelled UCI. For example, if the UE 120 is not configured with automatic transmission of cancelled UCI, then the UE 120 may wait to receive DCI that instructs the UE 120 to transmit cancelled UCI (and/or may request the DCI after expiration of a timer), and may transmit the UCI based at least in part on that DCI, as described in more detail below in connection with Fig. 5. If the UE 120 is configured with automatic transmission of cancelled UCI and a next uplink communication (e.g., a data or control communication occurring after the UCI is cancelled) has sufficient resources for transmitting the cancelled UCI, then the UE 120 uses automatic transmission of cancelled UCI to transmit the cancelled UCI in the next uplink communication, as described in more detail below in connection with Fig. 6.

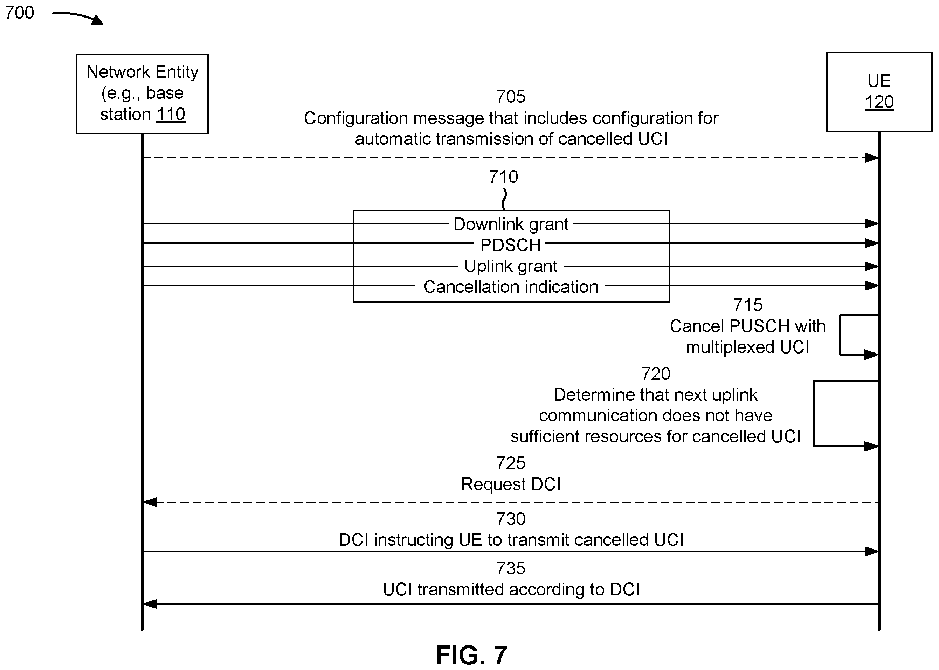

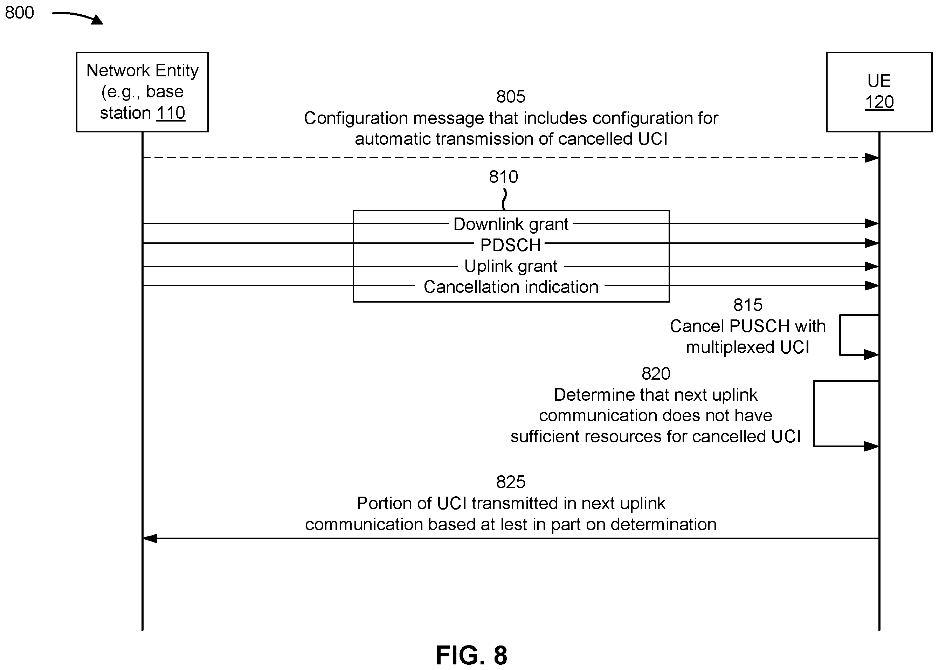

As another example, if the UE 120 is configured with automatic transmission of cancelled UCI and a next uplink communication (e.g., a data or control communication occurring after the UCI is cancelled) does not have sufficient resources for transmitting the cancelled UCI, then the UE 120 may wait to receive DCI that instructs the UE 120 to transmit cancelled UCI (and/or may request the DCI after expiration of a timer), and may transmit the UCI based at least in part on that DCI, as described in more detail below in connection with Fig. 7. Alternatively, if the UE 120 is configured with automatic transmission of cancelled UCI and a next uplink communication (e.g., a data or control communication occurring after the UCI is cancelled) does not have sufficient resources for transmitting the cancelled UCI, then the UE 120 may use automatic transmission of cancelled UCI to transmit a portion of the cancelled UCI in the next uplink communication, as described in more detail below in connection with Fig. 8.

In some aspects, if the UE 120 is configured with automatic transmission of cancelled UCI, then the UE 120 may use automatic transmission of cancelled UCI (e.g., as described in connection with Fig. 6, Fig. 7, and/or Fig. 8) only if there is a single cancelled UCI transmission (or if the number of cancelled UCI transmissions, for which HARQ bits are to be transmitted, is less than or equal to a threshold). Thus, in some aspects, if multiple UCI transmissions (or a threshold number of UCI transmissions) have been cancelled prior to transmission of any cancelled UCI, then the UE 120 may wait to receive DCI that instructs the UE 120 to transmit cancelled UCI (and/or may request the DCI after expiration of a timer), and may transmit the UCI based at least in part on that DCI, as described in more detail elsewhere herein. Additionally, or alternatively, if the UE 120 is configured with automatic transmission of cancelled UCI, then the UE 120 may use automatic transmission of cancelled UCI (e.g., as described in connection with Fig. 6, Fig. 7, and/or Fig. 8) only if the number of cancelled HARQ bits is less than (or, in some aspects, equal to) a threshold. Thus, in some aspects, if the number of cancelled HARQ bits is greater than (or, in some aspects, equal to) a threshold, then the UE 120 may wait to receive DCI that instructs the UE 120 to transmit cancelled UCI (and/or may request the DCI after expiration of a timer), and may transmit the UCI based at least in part on that DCI, as described in more detail elsewhere herein.

As shown by reference number 430, the UE 120 may transmit the UCI according to the determination of whether to transmit the UCI using automatic transmission of cancelled UCI or in response to DCI that instructs the UE to transmit cancelled UCI, as described above. In some aspects, the cancelled UCI may include channel state information (CSI), a scheduling request (SR), and/or one or more HARQ bits (e.g., a HARQ payload). If the UCI includes more than only HARQ bits (e.g., includes CSI and/or an SR), then the UE 120 may transmit only the HARQ bits (and not the CSI and/or the SR) when transmitting the cancelled UCI. In some aspects, the UE 120 may transmit the UCI with transmission of the cancelled PUSCH communication associated with which the UCI. The network entity may make a similar determination as the UE 120, as described above in connection with reference number 425, and may monitor for the UCI according to that determination. In this way, the UE 120 and the network entity may reduce ambiguity associated with HARQ feedback, which improves reliability (e.g., by triggering retransmission of PDSCH communications that were not successfully received by the UE 120) and conserves network resources (e.g., by refraining from retransmitting PDSCH communications that were successfully received by the UE 120).

As indicated above, Fig. 4 is provided as an example. Other examples may differ from what is described with regard to Fig. 4.

Fig. 5 is a diagram illustrating an example 500 associated with transmission of cancelled uplink control information, in accordance with the present disclosure. As shown in Fig. 5, a network entity (e.g., base station 110) and a UE 120 may communicate with one another.

As shown by reference number 505, in some aspects, the network entity may transmit, and the UE 120 may receive, a configuration message that excludes a configuration for automatic transmission of cancelled UCI. The configuration message may be, for example, an RRC message (e.g., an RRC configuration message or an RRC reconfiguration message) or a MAC-CE. In other words, the UE 120 may not be configured to use automatic transmission of cancelled UCI.

As shown by reference number 510, the network entity may transmit, and the UE 120 may receive, a downlink grant that schedules a PDSCH communication, the PDSCH communication scheduled by the downlink grant, an uplink grant that schedules a PUSCH communication, and a cancellation indication. Additional details are described above in connection with Fig. 3. In some aspects, the UE 120 may be configured to, may be scheduled to, or may determine to multiplex UCI, corresponding to the PDSCH communication (e.g., one or more HARQ bits indicating whether the PDSCH communication was successfully received by the UE 120), and the PUSCH communication. In some aspects, the HARQ bits included in the UCI may have a same priority. As shown by reference number 515, the UE 120 may cancel transmission of the PUSCH communication and the UCI based at least in part on the cancellation indication, as described in more detail above in connection with Fig. 3.

As shown by reference number 520, in some aspects, the network entity may transmit, and the UE 120 may receive, DCI (e.g., having DCI format 2_4) instructing the UE 120 to transmit the cancelled UCI. In some aspects, the DCI may indicate one or more resources (e.g., time domain resources, frequency domain resources, and/or spatial domain resources) in which the UE 120 is to transmit the UCI. Additionally, or alternatively, the DCI may indicate one or more HARQ bits to be transmitted by the UE 120 in the UCI.

As shown by reference number 525, the UE 120 may determine to transmit the UCI (e.g., the cancelled UCI) in response to the DCI that instructs the UE 120 to transmit cancelled UCI. For example, the UE 120 may determine to transmit the UCI in response to the DCI based at least in part on a determination that the UE 120 is not configured with automatic transmission of cancelled UCI and/or based at least in part on a determination that the UE 120 has received the DCI that instructs the UE 120 to transmit cancelled UCI. In some aspects, the UE 120 may wait to receive the DCI, that instructs the UE 120 to transmit cancelled UCI, prior to transmitting the cancelled UCI.

In some aspects, if the UE 120 does not receive the DCI for a threshold amount of time (e.g., after receiving the cancellation indication or after a time at which the PUSCH and multiplexed UCI were scheduled to be transmitted), then the UE 120 may request the DCI (e.g., by transmitting a request to the network entity). In this example, the network entity may receive the request, and may transmit the DCI to the UE 120 based at least in part on the request. In some aspects, the UE 120 may use a timer to track the amount of time, and may transmit the request for the DCI upon expiration of the timer if the UE 120 does not receive the DCI prior to expiration of the timer. In some aspects, the UE 120 may transmit the request for the DCI in a next uplink data communication or a next uplink control communication after expiration of the timer.

Alternatively, if the UE 120 does not receive the DCI for a threshold amount of time (e.g., after receiving the cancellation indication or after a time at which the PUSCH and multiplexed UCI were scheduled to be transmitted), then the UE 120 may perform automatic transmission of cancelled UCI. For example, the UE 120 may determine a number of resources (e.g., REs) available for transmission of the UCI in the next uplink communication (e.g., a PUSCH communication or a PUCCH communication) after expiration of the timer (e.g., accounting for processing time). The UE 120 may determine the number of available REs as described below in connection with Fig. 6. The UE 120 may transmit a set of latest cancelled HARQ bits (e.g., the HARQ bits that are latest in time) in the available REs. In some aspects, the UE 120 may drop the rest of the HARQ bits that are not transmitted in the next uplink communication. Alternatively, the UE 120 may transmit the rest of the HARQ bits in one or more subsequent uplink communications according to availability of REs in those one or more subsequent uplink communications.

As shown by reference number 530, the UE 120 may transmit the UCI according to the DCI (e.g., as instructed by the DCI) and/or based at least in part on determining to transmit the UCI in response to the DCI. The network entity may make a similar determination as the UE 120, as described above in connection with reference number 525, and may monitor for the UCI according to that determination. In this way, the UE 120 and the network entity may reduce ambiguity associated with HARQ feedback, which improves reliability (e.g., by triggering retransmission of PDSCH communications that were not successfully received by the UE 120) and conserves network resources (e.g., by refraining from retransmitting PDSCH communications that were successfully received by the UE 120).

As indicated above, Fig. 5 is provided as an example. Other examples may differ from what is described with regard to Fig. 5.

Fig. 6 is a diagram illustrating an example 600 associated with transmission of cancelled uplink control information, in accordance with the present disclosure. As shown in Fig. 6, a network entity (e.g., base station 110) and a UE 120 may communicate with one another.

As shown by reference number 605, in some aspects, the network entity may transmit, and the UE 120 may receive, a configuration message that includes a configuration for automatic transmission of cancelled UCI. The configuration message may be, for example, an RRC message (e.g., an RRC configuration message or an RRC reconfiguration message) or a MAC-CE. In other words, the UE 120 may be configured to use automatic transmission of cancelled UCI.

As shown by reference number 610, the network entity may transmit, and the UE 120 may receive, a downlink grant that schedules a PDSCH communication, the PDSCH communication scheduled by the downlink grant, an uplink grant that schedules a PUSCH communication, and a cancellation indication. Additional details are described above in connection with Fig. 3. In some aspects, the UE 120 may be configured to, may be scheduled to, or may determine to multiplex UCI, corresponding to the PDSCH communication (e.g., one or more HARQ bits indicating whether the PDSCH communication was successfully received by the UE 120), and the PUSCH communication. In some aspects, the HARQ bits included in the UCI may have a same priority. As shown by reference number 615, the UE 120 may cancel transmission of the PUSCH communication and the UCI based at least in part on the cancellation indication, as described in more detail above in connection with Fig. 3.

As shown by reference number 620, based at least in part on determining that automatic transmission of cancelled UCI is configured for the UE 120, the UE 120 may determine whether a next uplink communication (e.g., a next uplink data communication or a next uplink control communication) has sufficient resources (e.g., REs) for transmission of the cancelled UCI. For example, the UE 120 may use a modulation and coding scheme (MCS), a code rate, and/or another parameter (which may be indicated by the network entity, such as in DCI for an uplink data communication) to determine a number of REs occupied by data or control information to be transmitted in the next uplink communication (e.g., a number of REs occupied by data in the next uplink data communication or number of REs occupied by control information, other than the cancelled UCI, in a next uplink control communication). The UE 120 may calculate a remaining number of REs by subtracting the number of occupied REs from the total number of REs scheduled for the uplink communication. The UE 120 may use the MCS, the code rate, and/or the other parameter to determine whether the remaining number of REs is sufficient for transmission of the cancelled UCI.

In example 600, the UE 120 determines that the next uplink communication has sufficient resources for transmission of the cancelled UCI. As a result, the UE 120 determines to use automatic transmission of cancelled UCI to transmit the cancelled UCI.

As shown by reference number 625, in some aspects, the UE 120 may receive DCI instructing the UE 120 to transmit cancelled UCI even if the UE 120 is configured for automatic transmission of cancelled UCI. For example, the network entity may determine that one or more HARQ bits, included in a set of HARQ bits that were to be reported in the cancelled UCI, are no longer needed for processing by the network entity. In this example, the network entity may transmit the DCI to the UE 120 to indicate one or more HARQ bits that are needed by the network entity (and thus are to be included in the UCI transmitted by the UE 120). Based at least in part on receiving the DCI instructing the UE 120 to transmit cancelled UCI (e.g., prior to receiving DCI format 0_1 that include an uplink grant and/or prior to receiving DCI format 1_1 that includes a downlink grant), the UE 120 may transmit only the one or more HARQ bits indicated in the DCI, and may exclude any other HARQ bits (that are not indicated in the DCI) from the UCI, such as by dropping the other HARQ bits and/or deleting the other HARQ bits from memory (e.g., a buffer). In some aspects, the network entity may not transmit the DCI instructing the UE 120 to transmit cancelled UCI (as indicated by the dashed line in Fig. 6).

In some aspects, if the UE 120 is configured for automatic transmission of cancelled UCI, then the DCI instructing the UE 120 to transmit cancelled UCI may exclude scheduling information for transmission of the cancelled UCI. In this example, the UE 120 may use automatic transmission of cancelled UCI to transmit the UCI in the next uplink communication. Alternatively, the DCI instructing the UE 120 to transmit cancelled UCI may include scheduling information despite the UE 120 being configured for automatic transmission of cancelled UCI. In this example, the scheduling information in the DCI may override any scheduling information associated with automatic transmission of the cancelled UCI to enable more flexible scheduling by the network entity. As a result, the UE 120 may transmit the one or more HARQ bits indicated by the DCI in one or more resources indicated in the DCI.

As shown by reference number 630, the UE 120 may transmit the UCI in a next uplink communication based at least in part on determining that automatic transmission of cancelled UCI is configured for the UE 120 and that the next uplink communication has sufficient resources for transmission of the cancelled UCI. If the UE 120 does not receive DCI instructing the UE 120 to transmit less than all of the HARQ bits from the cancelled UCI, then the UE 120 may transmit all of the HARQ bits from the cancelled UCI. Alternatively, if the UE 120 does receive the DCI, then the UE 120 may transmit a subset of all HARQ bits according to the DCI and/or may transmit the UCI in one or more resources indicated in the DCI.

The network entity may make a similar determination as the UE 120, as described above, and may monitor for the UCI according to that determination. In this way, the UE 120 and the network entity may reduce ambiguity associated with HARQ feedback, which improves reliability (e.g., by triggering retransmission of PDSCH communications that were not successfully received by the UE 120) and conserves network resources (e.g., by refraining from retransmitting PDSCH communications that were successfully received by the UE 120).

As indicated above, Fig. 6 is provided as an example. Other examples may differ from what is described with regard to Fig. 6.

Fig. 7 is a diagram illustrating an example 700 associated with transmission of cancelled uplink control information, in accordance with the present disclosure. As shown in Fig. 7, a network entity (e.g., base station 110) and a UE 120 may communicate with one another.

As shown by reference number 705, in some aspects, the network entity may transmit, and the UE 120 may receive, a configuration message that includes a configuration for automatic transmission of cancelled UCI. The configuration message may be, for example, an RRC message (e.g., an RRC configuration message or an RRC reconfiguration message) or a MAC-CE. In other words, the UE 120 may be configured to use automatic transmission of cancelled UCI.

As shown by reference number 710, the network entity may transmit, and the UE 120 may receive, a downlink grant that schedules a PDSCH communication, the PDSCH communication scheduled by the downlink grant, an uplink grant that schedules a PUSCH communication, and a cancellation indication. Additional details are described above in connection with Fig. 3. In some aspects, the UE 120 may be configured to, may be scheduled to, or may determine to multiplex UCI, corresponding to the PDSCH communication (e.g., one or more HARQ bits indicating whether the PDSCH communication was successfully received by the UE 120), and the PUSCH communication. In some aspects, the HARQ bits included in the UCI may have a same priority. As shown by reference number 715, the UE 120 may cancel transmission of the PUSCH communication and the UCI based at least in part on the cancellation indication, as described in more detail above in connection with Fig. 3.

As shown by reference number 720, based at least in part on determining that automatic transmission of cancelled UCI is configured for the UE 120, the UE 120 may determine whether a next uplink communication (e.g., a next uplink data communication or a next uplink control communication) has sufficient resources (e.g., REs) for transmission of the cancelled UCI, as described above in connection with Fig. 6.

In example 700, the UE 120 determines that the next uplink communication does not have sufficient resources for transmission of the cancelled UCI. As a result, the UE 120 determines to transmit the cancelled UCI in response to DCI instructing the UE 120 to transmit cancelled UCI.

As shown by reference number 725, in some aspects, because automatic transmission of cancelled UCI is configured for the UE 120, the network entity may not transmit DCI instructing the UE 120 to transmit cancelled UCI, and the UE 120 may transmit a request for the DCI. The UE 120 may transmit the request based at least in part on determining that the next uplink communication does not have sufficient resources for transmission of the cancelled UCI and/or based at least in part on expiration of a timer (as described above). The network entity may transmit the DCI based at least in part on receiving the request from the UE 120, as shown by reference number 730. Alternatively, the network entity may determine that there are not sufficient resources for transmission of the cancelled UCI in the next uplink communication, and may transmit the DCI based at least in part on this determination (as also shown by reference number 730). Thus, in some aspects, the UE 120 may not transmit the request for the DCI (as indicated by the dashed line in Fig. 7).

Alternatively, as described above in connection with Fig. 5, if the UE 120 does not receive the DCI for a threshold amount of time (e.g., based at least in part on expiration of a timer), then the UE 120 may perform automatic transmission of cancelled UCI. For example, the UE 120 may determine a number of resources (e.g., REs) available for transmission of the UCI in the next uplink communication (e.g., a PUSCH communication or a PUCCH communication) after expiration of the timer (e.g., accounting for processing time). The UE 120 may determine the number of available REs as described above in connection with Fig. 6. The UE 120 may transmit a set of latest cancelled HARQ bits (e.g., the HARQ bits that are latest in time) in the available REs. In some aspects, the UE 120 may drop the rest of the HARQ bits that are not transmitted in the next uplink communication. Alternatively, the UE 120 may transmit the rest of the HARQ bits in one or more subsequent uplink communications according to availability of REs in those one or more subsequent uplink communications.

In some aspects, the UE 120 may transmit one or more HARQ bits indicated in the DCI in the next uplink communication, and may exclude any other HARQ bits (that are not indicated in the DCI) from the next uplink communication. If the one or more HARQ bits indicated in the DCI includes fewer than all of the cancelled HARQ bits, then the UE 120 may drop the remaining HARQ bit(s) (not indicated in DCI), in some aspects. Alternatively, the UE 120 may transmit the remaining HARQ bit(s) in one or more subsequent uplink communications (e.g., one or more PUSCH and/or PUCCH communications that occur after the next uplink communication) according to availability of REs in those one or more subsequent uplink communications.

As shown by reference number 735, the UE 120 may transmit the UCI according to the DCI and/or based at least in part on determining to transmit the UCI in response to the DCI. The network entity may make a similar determination as the UE 120, as described above, and may monitor for the UCI according to that determination. In this way, the UE 120 and the network entity may reduce ambiguity associated with HARQ feedback, which improves reliability (e.g., by triggering retransmission of PDSCH communications that were not successfully received by the UE 120) and conserves network resources (e.g., by refraining from retransmitting PDSCH communications that were successfully received by the UE 120).

As indicated above, Fig. 7 is provided as an example. Other examples may differ from what is described with regard to Fig. 7.

Fig. 8 is a diagram illustrating an example 800 associated with transmission of cancelled uplink control information, in accordance with the present disclosure. As shown in Fig. 8, a network entity (e.g., base station 110) and a UE 120 may communicate with one another.

As shown by reference number 805, in some aspects, the network entity may transmit, and the UE 120 may receive, a configuration message that includes a configuration for automatic transmission of cancelled UCI. The configuration message may be, for example, an RRC message (e.g., an RRC configuration message or an RRC reconfiguration message) or a MAC-CE. In other words, the UE 120 may be configured to use automatic transmission of cancelled UCI.

As shown by reference number 810, the network entity may transmit, and the UE 120 may receive, a downlink grant that schedules a PDSCH communication, the PDSCH communication scheduled by the downlink grant, an uplink grant that schedules a PUSCH communication, and a cancellation indication. Additional details are described above in connection with Fig. 3. In some aspects, the UE 120 may be configured to, may be scheduled to, or may determine to multiplex UCI, corresponding to the PDSCH communication (e.g., one or more HARQ bits indicating whether the PDSCH communication was successfully received by the UE 120), and the PUSCH communication. In some aspects, the HARQ bits included in the UCI may have a same priority. As shown by reference number 815, the UE 120 may cancel transmission of the PUSCH communication and the UCI based at least in part on the cancellation indication, as described in more detail above in connection with Fig. 3.

As shown by reference number 820, based at least in part on determining that automatic transmission of cancelled UCI is configured for the UE 120, the UE 120 may determine whether a next uplink communication (e.g., a next uplink data communication or a next uplink control communication) has sufficient resources (e.g., REs) for transmission of the cancelled UCI, as described above in connection with Fig. 6.

In example 800, the UE 120 determines that the next uplink communication does not have sufficient resources for transmission of the cancelled UCI. However, in this example, the UE 120 determines to transmit a portion of the cancelled UCI (e.g., in a next uplink communication) using automatic transmission of cancelled UCI. The UE 120 may drop a remaining portion of the cancelled UCI and/or transmit the remaining portion of the cancelled UCI in another uplink communication.

As shown by reference number 825, the UE 120 may transmit the UCI (e.g., a portion of the UCI) based at least in part on determining that the next uplink communication does not have sufficient resources for transmission of the cancelled UCI. For example, the UE 120 may transmit a first set of (e.g., one or more) HARQ bits (e.g., corresponding to the earliest-occurring PDSCH communication(s) or the latest-occurring PDSCH communication(s)) in the next uplink communication, and may refrain from transmitting a second set of (e.g., one or more) HARQ bits.

In some aspects, the UE 120 may transmit the UCI (or a portion of the UCI) based at least in part on expiration of a timer and based at least in part on determining that the next uplink communication does not have sufficient resources for transmission of the cancelled UCI. In some aspects, the UE 120 may transmit a set of latest cancelled HARQ bits (e.g., the HARQ bits that are latest in time and/or that correspond to the latest-occurring PDSCH communication(s)) in the available REs. In some aspects, the UE 120 may drop the rest of the HARQ bits that are not transmitted in the next uplink communication. Alternatively, the UE 120 may transmit the rest of the HARQ bits in one or more subsequent uplink communications according to availability of REs in those one or more subsequent uplink communications. In some aspects, the UE 120 may transmit the HARQ bits (e.g., by appending the HARQ bits to a series of uplink communications) in an order from latest-occurring to earliest-occurring.

In some aspects, based at least in part on determining that the next uplink communication does not have sufficient resources for transmission of the cancelled UCI, the UE 120 may transmit a set of earliest cancelled HARQ bits (e.g., the HARQ bits that are earliest in time and/or that correspond to the earliest-occurring PDSCH communication(s)) in the available REs. In some aspects, the UE 120 may drop the rest of the HARQ bits that are not transmitted in the next uplink communication. Alternatively, the UE 120 may transmit the rest of the HARQ bits in one or more subsequent uplink communications according to availability of REs in those one or more subsequent uplink communications. In some aspects, the UE 120 may transmit the HARQ bits (e.g., by appending the HARQ bits to a series of uplink communications) in an order from earliest-occurring to latest-occurring.

In some aspects, the UE 120 may drop the second set of HARQ bits. Alternatively, the UE 120 may receive, from the network entity, DCI instructing the UE 120 to transmit the second set of HARQ bits (e.g., in one or more resources indicated by the DCI). For example, the network entity may determine whether the HARQ bits that are not received by the network entity are needed by the network entity for processing. If those HARQ bits are not needed, then the network entity may refrain from transmitting the DCI. If those HARQ bits are needed, then the network entity may transmit the DCI. Alternatively, the UE 120 may transmit the second set of HARQ bits in one or more subsequent uplink communications, as resources are available in those subsequent uplink communication(s) (e.g., without receiving DCI instructing the UE 120 to transmit the second set of HARQ bits).

The network entity may make a similar determination as the UE 120, as described above, and may monitor for the UCI according to that determination. In this way, the UE 120 and the network entity may reduce ambiguity associated with HARQ feedback, which improves reliability (e.g., by triggering retransmission of PDSCH communications that were not successfully received by the UE 120) and conserves network resources (e.g., by refraining from retransmitting PDSCH communications that were successfully received by the UE 120).

As indicated above, Fig. 8 is provided as an example. Other examples may differ from what is described with regard to Fig. 8.

Fig. 9 is a diagram illustrating an example process 900 performed, for example, by a UE, in accordance with the present disclosure. Example process 900 is an example where the UE (e.g., UE 120) performs operations associated with transmission of cancelled uplink control information.

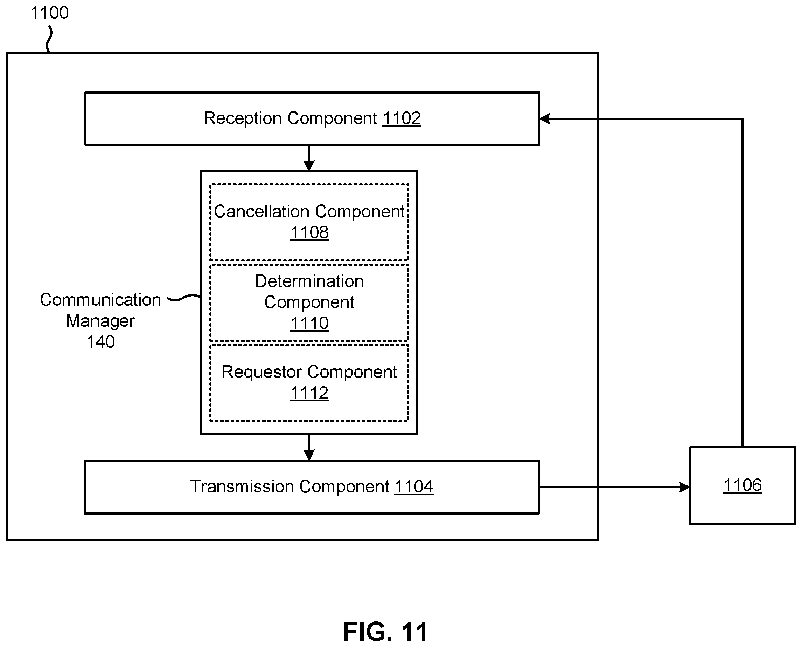

As shown in Fig. 9, in some aspects, process 900 may include canceling an uplink data communication that is to be multiplexed with UCI (block 910). For example, the UE (e.g., using communication manager 140 and/or cancellation component 1108, depicted in Fig. 11) may cancel an uplink data communication that is to be multiplexed with UCI, as described above.

As further shown in Fig. 9, in some aspects, process 900 may include determining whether to transmit the UCI using automatic transmission of cancelled UCI or in response to DCI that instructs the UE to transmit cancelled UCI (block 920). For example, the UE (e.g., using communication manager 140 and/or determination component 1110, depicted in Fig. 11) may determine whether to transmit the UCI using automatic transmission of cancelled UCI or in response to DCI that instructs the UE to transmit cancelled UCI, as described above.

As further shown in Fig. 9, in some aspects, process 900 may include transmitting the UCI based at least in part on the determination (block 930). For example, the UE (e.g., using communication manager 140 and/or transmission component 1104, depicted in Fig. 11) may transmit the UCI based at least in part on the determination, as described above.

Process 900 may include additional aspects, such as any single aspect or any combination of aspects described below and/or in connection with one or more other processes described elsewhere herein.

In a first aspect, determining whether to transmit the UCI using automatic transmission of cancelled UCI or in response to the DCI includes determining to transmit the UCI using automatic transmission of cancelled UCI, and transmitting the UCI includes transmitting the UCI in a next uplink data communication or a next uplink control communication after cancelling the uplink data communication, based at least in part on determining to transmit the UCI using automatic transmission of cancelled UCI.

In a second aspect, alone or in combination with the first aspect, determining whether to transmit the UCI using automatic transmission of cancelled UCI or in response to the DCI includes determining to transmit the UCI in response to the DCI, and transmitting the UCI includes transmitting the UCI as instructed in the DCI based at least in part on determining to transmit the UCI in response to the DCI.

In a third aspect, alone or in combination with one or more of the first and second aspects, determining whether to transmit the UCI using automatic transmission of cancelled UCI or in response to the DCI includes determining that automatic transmission of cancelled UCI is not configured for the UE, and determining to transmit the UCI in response to the DCI based at least in part on determining that automatic transmission of cancelled UCI is not configured for the UE.

In a fourth aspect, alone or in combination with one or more of the first through third aspects, determining whether to transmit the UCI using automatic transmission of cancelled UCI or in response to the DCI includes determining that automatic transmission of cancelled UCI is configured for the UE, determining that a next uplink data communication or a next uplink control communication has sufficient resources for transmission of the UCI, and determining to transmit the UCI using automatic transmission of cancelled UCI based at least in part on determining that automatic transmission of cancelled UCI is configured for the UE and that the next uplink data communication or the next uplink control communication has sufficient resources for transmission of the UCI.

In a fifth aspect, alone or in combination with one or more of the first through fourth aspects, determining whether to transmit the UCI using automatic transmission of cancelled UCI or in response to the DCI includes determining that automatic transmission of cancelled UCI is configured for the UE, determining that a next uplink data communication or a next uplink control communication does not have sufficient resources for transmission of the UCI, and determining to transmit the UCI in response to the DCI based at least in part on determining that automatic transmission of cancelled UCI is configured for the UE and that the next uplink data communication or the next uplink control communication does not have sufficient resources for transmission of the UCI.

In a sixth aspect, alone or in combination with one or more of the first through fifth aspects, process 900 includes determining that a timer has expired based at least in part on determining to transmit the UCI in response to the DCI, determining that the DCI has not been received prior to expiration of the timer, and requesting the DCI based at least in part on determining that the DCI has not been received prior to expiration of the timer.

In a seventh aspect, alone or in combination with one or more of the first through sixth aspects, determining whether to transmit the UCI using automatic transmission of cancelled UCI or in response to the DCI includes determining that automatic transmission of cancelled UCI is configured for the UE, determining that a next uplink data communication or a next uplink control communication does not have sufficient resources for transmission of the UCI, and determining to transmit a portion of the UCI using automatic transmission of cancelled UCI based at least in part on determining that automatic transmission of cancelled UCI is configured for the UE and that the next uplink data communication or the next uplink control communication does not have sufficient resources for transmission of the UCI.

In an eighth aspect, alone or in combination with one or more of the first through seventh aspects, a remaining portion of the UCI that is not transmitted in the next uplink data communication or the next uplink control communication is dropped or transmitted in a subsequent uplink communication.

In a ninth aspect, alone or in combination with one or more of the first through eighth aspects, determining whether to transmit the UCI using automatic transmission of cancelled UCI or in response to the DCI includes determining to transmit the UCI using automatic transmission of cancelled UCI, and process 900 includes receiving the DCI prior to transmission of the UCI, the DCI indicates a set of HARQ bits to be transmitted in the UCI, and the set of HARQ bits indicated in the DCI are transmitted in the UCI, and any HARQ bits not indicated in the DCI are excluded from the UCI.

In a tenth aspect, alone or in combination with one or more of the first through ninth aspects, the UCI includes a set of HARQ bits that all have a same priority.

Although Fig. 9 shows example blocks of process 900, in some aspects, process 900 may include additional blocks, fewer blocks, different blocks, or differently arranged blocks than those depicted in Fig. 9. Additionally, or alternatively, two or more of the blocks of process 900 may be performed in parallel.

Fig. 10 is a diagram illustrating an example process 1000 performed, for example, by a network entity, in accordance with the present disclosure. Example process 1000 is an example where the network entity (e.g., base station 110) performs operations associated with transmission of cancelled uplink control information.

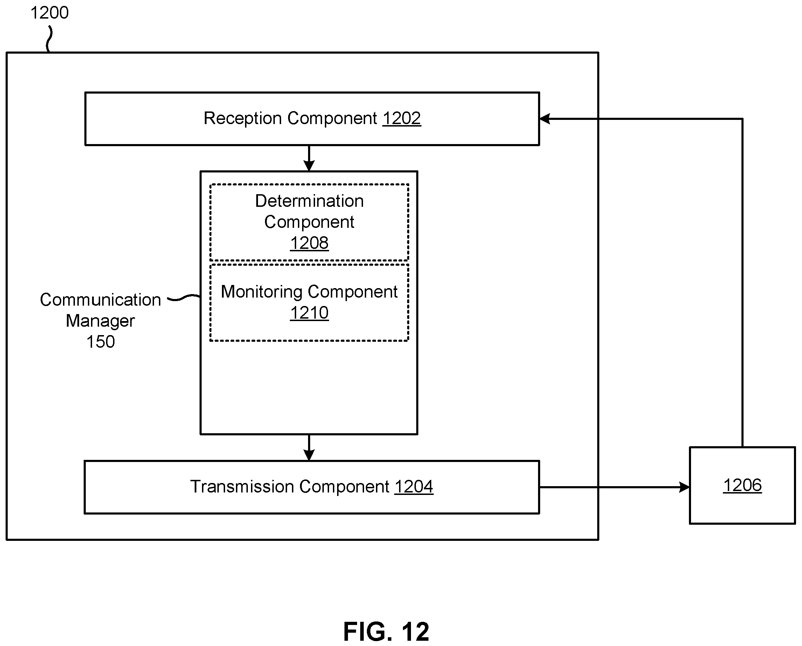

As shown in Fig. 10, in some aspects, process 1000 may include transmitting a cancellation indication instructing a UE to cancel an uplink data communication, wherein the uplink data communication is to be multiplexed with UCI (block 1010). For example, the network entity (e.g., using communication manager 150 and/or transmission component 1204, depicted in Fig. 12) may transmit a cancellation indication instructing a UE to cancel an uplink data communication, wherein the uplink data communication is to be multiplexed with UCI, as described above.

As further shown in Fig. 10, in some aspects, process 1000 may include determining whether the UE is to transmit the UCI using automatic transmission of cancelled UCI or in response to DCI that instructs the UE to transmit cancelled UCI (block 1020). For example, the network entity (e.g., using communication manager 150 and/or determination component 1208, depicted in Fig. 12) may determine whether the UE is to transmit the UCI using automatic transmission of cancelled UCI or in response to DCI that instructs the UE to transmit cancelled UCI, as described above.

As further shown in Fig. 10, in some aspects, process 1000 may include monitoring for the UCI based at least in part on the determination (block 1030). For example, the network entity (e.g., using communication manager 150, reception component 1202, and/or monitoring component 1210, depicted in Fig. 12) may monitor for the UCI based at least in part on the determination, as described above.

Process 1000 may include additional aspects, such as any single aspect or any combination of aspects described below and/or in connection with one or more other processes described elsewhere herein.

In a first aspect, determining whether the UE is to transmit the UCI using automatic transmission of cancelled UCI or in response to the DCI includes determining that the UE is to transmit the UCI using automatic transmission of cancelled UCI, and monitoring for the UCI includes monitoring for the UCI in a next uplink data communication or a next uplink control communication associated with the UE after cancelling the uplink data communication, based at least in part on determining that the UE is to transmit the UCI using automatic transmission of cancelled UCI.

In a second aspect, alone or in combination with the first aspect, determining whether the UE is to transmit the UCI using automatic transmission of cancelled UCI or in response to the DCI includes determining that the UE is to transmit the UCI in response to the DCI, and monitoring for the UCI includes monitoring for the UCI as instructed in the DCI based at least in part on determining that the UE is to transmit the UCI in response to the DCI.

In a third aspect, alone or in combination with one or more of the first and second aspects, determining whether the UE is to transmit the UCI using automatic transmission of cancelled UCI or in response to the DCI includes determining that automatic transmission of cancelled UCI is not configured for the UE, and determining that the UE is to transmit the UCI in response to the DCI based at least in part on determining that automatic transmission of cancelled UCI is not configured for the UE.

In a fourth aspect, alone or in combination with one or more of the first through third aspects, determining whether the UE is to transmit the UCI using automatic transmission of cancelled UCI or in response to the DCI includes determining that automatic transmission of cancelled UCI is configured for the UE, determining that a next uplink data communication or a next uplink control communication associated with the UE has sufficient resources for transmission of the UCI, and determining that the UE is to transmit the UCI using automatic transmission of cancelled UCI based at least in part on determining that automatic transmission of cancelled UCI is configured for the UE and that the next uplink data communication or the next uplink control communication associated with the UE has sufficient resources for transmission of the UCI.

In a fifth aspect, alone or in combination with one or more of the first through fourth aspects, determining whether the UE is to transmit the UCI using automatic transmission of cancelled UCI or in response to the DCI includes determining that automatic transmission of cancelled UCI is configured for the UE, determining that a next uplink data communication or a next uplink control communication associated with the UE does not have sufficient resources for transmission of the UCI, and determining that the UE is to transmit the UCI in response to the DCI based at least in part on determining that automatic transmission of cancelled UCI is configured for the UE and that the next uplink data communication or the next uplink control communication associated with the UE does not have sufficient resources for transmission of the UCI.

In a sixth aspect, alone or in combination with one or more of the first through fifth aspects, process 1000 includes receiving a request for the DCI, and transmitting the DCI based at least in part on receiving the request.

In a seventh aspect, alone or in combination with one or more of the first through sixth aspects, determining whether the UE is to transmit the UCI using automatic transmission of cancelled UCI or in response to the DCI includes determining that automatic transmission of cancelled UCI is configured for the UE, determining that a next uplink data communication or a next uplink control communication associated with the UE does not have sufficient resources for transmission of the UCI, and monitoring for a portion of the UCI using automatic transmission of cancelled UCI based at least in part on determining that automatic transmission of cancelled UCI is configured for the UE and that the next uplink data communication or the next uplink control communication associated with the UE does not have sufficient resources for transmission of the UCI.

In an eighth aspect, alone or in combination with one or more of the first through seventh aspects, a remaining portion of the UCI that is not transmitted in the next uplink data communication or the next uplink control communication is dropped or received in a subsequent uplink communication.

In a ninth aspect, alone or in combination with one or more of the first through eighth aspects, determining whether the UE is to transmit the UCI using automatic transmission of cancelled UCI or in response to the DCI includes determining that the UE is to transmit the UCI using automatic transmission of cancelled UCI, and process 1000 includes transmitting the DCI prior to reception of the UCI, the DCI indicates a set of HARQ bits to be transmitted in the UCI, and the set of HARQ bits indicated in the DCI are received in the UCI, and any HARQ bits not indicated in the DCI are excluded from the UCI.

In a tenth aspect, alone or in combination with one or more of the first through ninth aspects, the UCI includes a set of HARQ bits that all have a same priority.

Although Fig. 10 shows example blocks of process 1000, in some aspects, process 1000 may include additional blocks, fewer blocks, different blocks, or differently arranged blocks than those depicted in Fig. 10. Additionally, or alternatively, two or more of the blocks of process 1000 may be performed in parallel.

Fig. 11 is a block diagram of an example apparatus 1100 for wireless communication. The apparatus 1100 may be a UE, or a UE may include the apparatus 1100. In some aspects, the apparatus 1100 includes a reception component 1102 and a transmission component 1104, which may be in communication with one another (for example, via one or more buses and/or one or more other components). As shown, the apparatus 1100 may communicate with another apparatus 1106 (such as a UE, a base station, or another wireless communication device) using the reception component 1102 and the transmission component 1104. As further shown, the apparatus 1100 may include the communication manager 140. The communication manager 140 may include one or more of a cancellation component 1108, a determination component 1110, or a requestor component 1112, among other examples.

In some aspects, the apparatus 1100 may be configured to perform one or more operations described herein in connection with Figs. 3-8. Additionally, or alternatively, the apparatus 1100 may be configured to perform one or more processes described herein, such as process 900 of Fig. 9. In some aspects, the apparatus 1100 and/or one or more components shown in Fig. 11 may include one or more components of the UE described above in connection with Fig. 2. Additionally, or alternatively, one or more components shown in Fig. 11 may be implemented within one or more components described above in connection with Fig. 2. Additionally, or alternatively, one or more components of the set of components may be implemented at least in part as software stored in a memory. For example, a component (or a portion of a component) may be implemented as instructions or code stored in a non-transitory computer-readable medium and executable by a controller or a processor to perform the functions or operations of the component.

The reception component 1102 may receive communications, such as reference signals, control information, data communications, or a combination thereof, from the apparatus 1106. The reception component 1102 may provide received communications to one or more other components of the apparatus 1100. In some aspects, the reception component 1102 may perform signal processing on the received communications (such as filtering, amplification, demodulation, analog-to-digital conversion, demultiplexing, deinterleaving, de-mapping, equalization, interference cancellation, or decoding, among other examples), and may provide the processed signals to the one or more other components of the apparatus 1106. In some aspects, the reception component 1102 may include one or more antennas, a demodulator, a MIMO detector, a receive processor, a controller/processor, a memory, or a combination thereof, of the UE described above in connection with Fig. 2.

The transmission component 1104 may transmit communications, such as reference signals, control information, data communications, or a combination thereof, to the apparatus 1106. In some aspects, one or more other components of the apparatus 1106 may generate communications and may provide the generated communications to the transmission component 1104 for transmission to the apparatus 1106. In some aspects, the transmission component 1104 may perform signal processing on the generated communications (such as filtering, amplification, modulation, digital-to-analog conversion, multiplexing, interleaving, mapping, or encoding, among other examples), and may transmit the processed signals to the apparatus 1106. In some aspects, the transmission component 1104 may include one or more antennas, a modulator, a transmit MIMO processor, a transmit processor, a controller/processor, a memory, or a combination thereof, of the UE described above in connection with Fig. 2. In some aspects, the transmission component 1104 may be co-located with the reception component 1102 in a transceiver.

The cancellation component 1108 may cancel an uplink data communication that is to be multiplexed with UCI. The determination component 1110 may determine whether to transmit the UCI using automatic transmission of cancelled UCI or in response to DCI that instructs the UE to transmit cancelled UCI. The transmission component 1104 may transmit the UCI based at least in part on the determination.

The determination component 1110 may determine that a timer has expired based at least in part on determining to transmit the UCI in response to the DCI. The determination component 1110 may determine that the DCI has not been received prior to expiration of the timer. The requestor component 1112 may request the DCI based at least in part on determining that the DCI has not been received prior to expiration of the timer.

The number and arrangement of components shown in Fig. 11 are provided as an example. In practice, there may be additional components, fewer components, different components, or differently arranged components than those shown in Fig. 11. Furthermore, two or more components shown in Fig. 11 may be implemented within a single component, or a single component shown in Fig. 11 may be implemented as multiple, distributed components. Additionally, or alternatively, a set of (one or more) components shown in Fig. 11 may perform one or more functions described as being performed by another set of components shown in Fig. 11.

Fig. 12 is a block diagram of an example apparatus 1200 for wireless communication. The apparatus 1200 may be a network entity, or a network entity may include the apparatus 1200. In some aspects, the apparatus 1200 includes a reception component 1202 and a transmission component 1204, which may be in communication with one another (for example, via one or more buses and/or one or more other components). As shown, the apparatus 1200 may communicate with another apparatus 1206 (such as a UE, a base station, or another wireless communication device) using the reception component 1202 and the transmission component 1204. As further shown, the apparatus 1200 may include the communication manager 150. The communication manager 150 may include one or more of a determination component 1208 or a monitoring component 1210, among other examples.

In some aspects, the apparatus 1200 may be configured to perform one or more operations described herein in connection with Figs. 3-8. Additionally, or alternatively, the apparatus 1200 may be configured to perform one or more processes described herein, such as process 1000 of Fig. 10. In some aspects, the apparatus 1200 and/or one or more components shown in Fig. 12 may include one or more components of the base station described above in connection with Fig. 2. Additionally, or alternatively, one or more components shown in Fig. 12 may be implemented within one or more components described above in connection with Fig. 2. Additionally, or alternatively, one or more components of the set of components may be implemented at least in part as software stored in a memory. For example, a component (or a portion of a component) may be implemented as instructions or code stored in a non-transitory computer-readable medium and executable by a controller or a processor to perform the functions or operations of the component.

The reception component 1202 may receive communications, such as reference signals, control information, data communications, or a combination thereof, from the apparatus 1206. The reception component 1202 may provide received communications to one or more other components of the apparatus 1200. In some aspects, the reception component 1202 may perform signal processing on the received communications (such as filtering, amplification, demodulation, analog-to-digital conversion, demultiplexing, deinterleaving, de-mapping, equalization, interference cancellation, or decoding, among other examples), and may provide the processed signals to the one or more other components of the apparatus 1206. In some aspects, the reception component 1202 may include one or more antennas, a demodulator, a MIMO detector, a receive processor, a controller/processor, a memory, or a combination thereof, of the base station described above in connection with Fig. 2.

The transmission component 1204 may transmit communications, such as reference signals, control information, data communications, or a combination thereof, to the apparatus 1206. In some aspects, one or more other components of the apparatus 1206 may generate communications and may provide the generated communications to the transmission component 1204 for transmission to the apparatus 1206. In some aspects, the transmission component 1204 may perform signal processing on the generated communications (such as filtering, amplification, modulation, digital-to-analog conversion, multiplexing, interleaving, mapping, or encoding, among other examples), and may transmit the processed signals to the apparatus 1206. In some aspects, the transmission component 1204 may include one or more antennas, a modulator, a transmit MIMO processor, a transmit processor, a controller/processor, a memory, or a combination thereof, of the base station described above in connection with Fig. 2. In some aspects, the transmission component 1204 may be co-located with the reception component 1202 in a transceiver.

The transmission component 1204 may transmit a cancellation indication instructing a UE to cancel an uplink data communication, wherein the uplink data communication is to be multiplexed with UCI. The determination component 1208 may determine whether the UE is to transmit the UCI using automatic transmission of cancelled UCI or in response to DCI that instructs the UE to transmit cancelled UCI. The monitoring component 1210 and/or the reception component 1202 may monitor for the UCI based at least in part on the determination.

The reception component 1202 may receive a request for the DCI. The transmission component 1204 may transmit the DCI based at least in part on receiving the request.

The number and arrangement of components shown in Fig. 12 are provided as an example. In practice, there may be additional components, fewer components, different components, or differently arranged components than those shown in Fig. 12. Furthermore, two or more components shown in Fig. 12 may be implemented within a single component, or a single component shown in Fig. 12 may be implemented as multiple, distributed components. Additionally, or alternatively, a set of (one or more) components shown in Fig. 12 may perform one or more functions described as being performed by another set of components shown in Fig. 12.

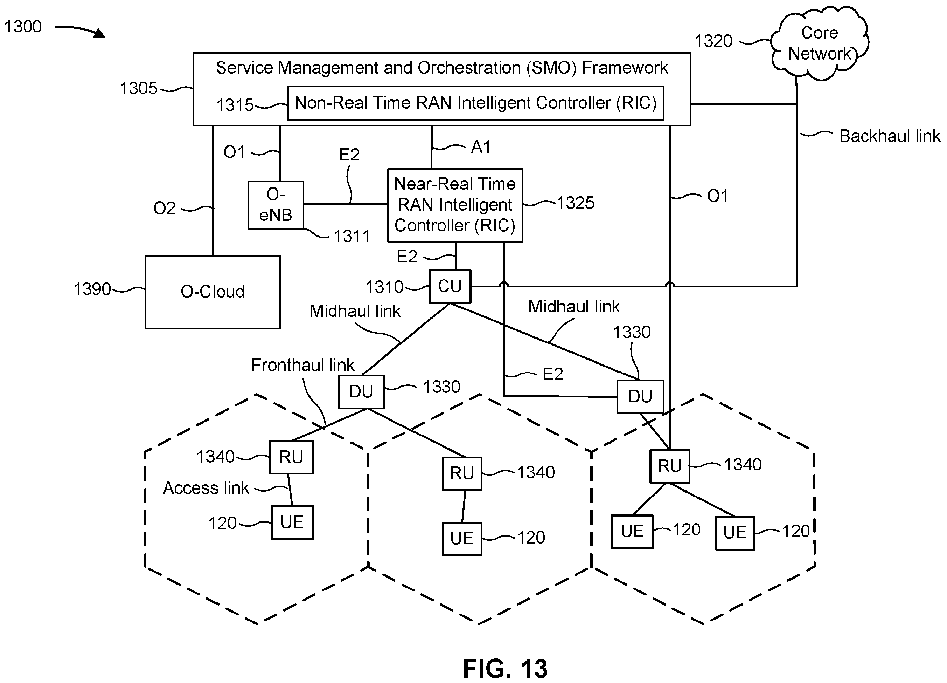

Fig. 13 is a diagram illustrating an example 1300 disaggregated base station architecture, in accordance with the present disclosure.

Deployment of communication systems, such as 5G NR systems, may be arranged in multiple manners with various components or constituent parts. In a 5G NR system, or network, a network node, a network entity, a mobility element of a network, a RAN node, a core network node, a network element, or a network equipment, such as a base station (BS, e.g., base station 110), or one or more units (or one or more components) performing base station functionality, may be implemented in an aggregated or disaggregated architecture. For example, a BS (such as a Node B (NB), eNB, NR BS, 5G NB, access point (AP), a TRP, a cell, or the like) may be implemented as an aggregated base station (also known as a standalone BS or a monolithic BS) or a disaggregated base station.

An aggregated base station may be configured to utilize a radio protocol stack that is physically or logically integrated within a single RAN node. A disaggregated base station may be configured to utilize a protocol stack that is physically or logically distributed among two or more units (such as one or more CUs, one or more DUs, or one or more RUs. In some aspects, a CU may be implemented within a RAN node, and one or more DUs may be co-located with the CU, or alternatively, may be geographically or virtually distributed throughout one or multiple other RAN nodes. The DUs may be implemented to communicate with one or more RUs. Each of the CU, DU and RU also can be implemented as virtual units, i.e., a virtual centralized unit (VCU), a virtual distributed unit (VDU), or a virtual radio unit (VRU).

Base station-type operation or network design may consider aggregation characteristics of base station functionality. For example, disaggregated base stations may be utilized in an IAB network, an O-RAN (such as the network configuration sponsored by the O-RAN Alliance), or a virtualized radio access network (vRAN, also known as a cloud radio access network (C-RAN)). Disaggregation may include distributing functionality across two or more units at various physical locations, as well as distributing functionality for at least one unit virtually, which can enable flexibility in network design. The various units of the disaggregated base station, or disaggregated RAN architecture, can be configured for wired or wireless communication with at least one other unit.

The disaggregated base station architecture shown in Fig. 13 may include one or more CUs 1310 that can communicate directly with a core network 1320 via a backhaul link, or indirectly with the core network 1320 through one or more disaggregated base station units (such as a Near-Real Time (Near-RT) RAN Intelligent Controller (RIC) 1325 via an E2 link, or a Non-Real Time (Non-RT) RIC 1315 associated with a Service Management and Orchestration (SMO) Framework 1305, or both). A CU 1310 may communicate with one or more DUs 1330 via respective midhaul links, such as an F1 interface. The DUs 1330 may communicate with one or more RUs 1340 via respective fronthaul links. The RUs 1340 may communicate with respective UEs 120 via one or more radio frequency (RF) access links. In some implementations, the UE 120 may be simultaneously served by multiple RUs 1340.

Each of the units (e.g., the CUs 1310, the DUs 1330, the RUs 1340), as well as the Near-RT RICs 1325, the Non-RT RICs 1315, and the SMO Framework 1305, may include one or more interfaces or be coupled to one or more interfaces configured to receive or transmit signals, data, or information (collectively, signals) via a wired or wireless transmission medium. Each of the units, or an associated processor or controller providing instructions to the communication interfaces of the units, can be configured to communicate with one or more of the other units via the transmission medium. For example, the units can include a wired interface configured to receive or transmit signals over a wired transmission medium to one or more of the other units. Additionally, the units can include a wireless interface, which may include a receiver, a transmitter or transceiver (such as an RF transceiver), configured to receive or transmit signals, or both, over a wireless transmission medium to one or more of the other units.

In some aspects, the CU 1310 may host one or more higher layer control functions. Such control functions can include RRC, packet data convergence protocol (PDCP), service data adaptation protocol (SDAP), or the like. Each control function can be implemented with an interface configured to communicate signals with other control functions hosted by the CU 1310. The CU 1310 may be configured to handle user plane functionality (e.g., Central Unit - User Plane (CU-UP)), control plane functionality (e.g., Central Unit - Control Plane (CU-CP)), or a combination thereof. In some implementations, the CU 1310 can be logically split into one or more CU-UP units and one or more CU-CP units. The CU-UP unit can communicate bidirectionally with the CU-CP unit via an interface, such as the E1 interface when implemented in an O-RAN configuration. The CU 1310 can be implemented to communicate with the DU 1330, as necessary, for network control and signaling.

The DU 1330 may correspond to a logical unit that includes one or more base station functions to control the operation of one or more RUs 1340. In some aspects, the DU 1330 may host one or more of a radio link control (RLC) layer, a medium access control (MAC) layer, and one or more high physical (PHY) layers (such as modules for forward error correction (FEC) encoding and decoding, scrambling, modulation and demodulation, or the like) depending, at least in part, on a functional split, such as those defined by the 3GPP. In some aspects, the DU 1330 may further host one or more low-PHY layers. Each layer (or module) can be implemented with an interface configured to communicate signals with other layers (and modules) hosted by the DU 1330, or with the control functions hosted by the CU 1310.

Lower-layer functionality can be implemented by one or more RUs 1340. In some deployments, an RU 1340, controlled by a DU 1330, may correspond to a logical node that hosts RF processing functions, or low-PHY layer functions (such as performing fast Fourier transform (FFT), inverse FFT (iFFT), digital beamforming, physical random access channel (PRACH) extraction and filtering, or the like), or both, based at least in part on the functional split, such as a lower layer functional split. In such an architecture, the RU(s) 1340 can be implemented to handle over the air (OTA) communication with one or more UEs 120. In some implementations, real-time and non-real-time aspects of control and user plane communication with the RU(s) 1340 can be controlled by the corresponding DU 1330. In some scenarios, this configuration can enable the DU(s) 1330 and the CU 1310 to be implemented in a cloud-based RAN architecture, such as a vRAN architecture.

The SMO Framework 1305 may be configured to support RAN deployment and provisioning of non-virtualized and virtualized network elements. For non-virtualized network elements, the SMO Framework 1305 may be configured to support the deployment of dedicated physical resources for RAN coverage requirements which may be managed via an operations and maintenance interface (such as an O1 interface). For virtualized network elements, the SMO Framework 1305 may be configured to interact with a cloud computing platform (such as an open cloud (O-Cloud) 1390) to perform network element life cycle management (such as to instantiate virtualized network elements) via a cloud computing platform interface (such as an O2 interface). Such virtualized network elements can include, but are not limited to, CUs 1310, DUs 1330, RUs 1340 and Near-RT RICs 1325. In some implementations, the SMO Framework 1305 can communicate with a hardware aspect of a 4G RAN, such as an open eNB (O-eNB) 1111, via an O1 interface. Additionally, in some implementations, the SMO Framework 1305 can communicate directly with one or more RUs 1340 via an O1 interface. The SMO Framework 1305 also may include a Non-RT RIC 1315 configured to support functionality of the SMO Framework 1305.

The Non-RT RIC 1315 may be configured to include a logical function that enables non-real-time control and optimization of RAN elements and resources, Artificial Intelligence/Machine Learning (AI/ML) workflows including model training and updates, or policy-based guidance of applications/features in the Near-RT RIC 1325. The Non-RT RIC 1315 may be coupled to or communicate with (such as via an A1 interface) the Near-RT RIC 1325. The Near-RT RIC 1325 may be configured to include a logical function that enables near-real-time control and optimization of RAN elements and resources via data collection and actions over an interface (such as via an E2 interface) connecting one or more CUs 1310, one or more DUs 1330, or both, as well as an O-eNB, with the Near-RT RIC 1325.

In some implementations, to generate AI/ML models to be deployed in the Near-RT RIC 1325, the Non-RT RIC 1315 may receive parameters or external enrichment information from external servers. Such information may be utilized by the Near-RT RIC 1325 and may be received at the SMO Framework 1305 or the Non-RT RIC 1315 from non-network data sources or from network functions. In some examples, the Non-RT RIC 1315 or the Near-RT RIC 1325 may be configured to tune RAN behavior or performance. For example, the Non-RT RIC 1315 may monitor long-term trends and patterns for performance and employ AI/ML models to perform corrective actions through the SMO Framework 1305 (such as reconfiguration via O1) or via creation of RAN management policies (such as A1 policies).

As indicated above, Fig. 13 is provided as an example. Other examples may differ from what is described with regard to Fig. 13.

## Claims

1. A method for wireless communication performed by a user equipment, UE, the method comprising:
cancelling (415) an uplink data communication that is to be multiplexed with uplink control information, UCI;
determining (425) whether to transmit the UCI using automatic transmission of cancelled UCI or in response to downlink control information, DCI, that instructs the UE to transmit cancelled UCI, wherein determining whether to transmit the UCI using automatic transmission of cancelled UCI or in response to the DCI comprises:
determining that automatic transmission of cancelled UCI is configured for the UE;
determining whether a next uplink data communication or a next uplink control communication has sufficient resources for transmission of the UCI; and
determining to transmit the UCI using automatic transmission of cancelled UCI based at least in part on determining that automatic transmission of cancelled UCI is configured for the UE and the determination of whether the next uplink data communication or the next uplink control communication has sufficient resources for transmission of the UCI; and
transmitting (430) the UCI based at least in part on the determination.

2. The method of claim 1, wherein determining whether to transmit the UCI using automatic transmission of cancelled UCI or in response to the DCI comprises determining to transmit the UCI using automatic transmission of cancelled UCI; and
wherein transmitting the UCI comprises transmitting the UCI in a next uplink data communication or a next uplink control communication after cancelling the uplink data communication, based at least in part on determining to transmit the UCI using automatic transmission of cancelled UCI.

3. The method of claim 1, wherein determining whether to transmit the UCI using automatic transmission of cancelled UCI or in response to the DCI comprises determining to transmit the UCI in response to the DCI; and
wherein transmitting the UCI comprises transmitting the UCI as instructed in the DCI based at least in part on determining to transmit the UCI in response to the DCI.

4. The method of claim 1, wherein determining whether the next uplink data communication or the next uplink control communication has sufficient resources for transmission of the UCI comprises:
determining that the next uplink data communication or the next uplink control communication has sufficient resources for transmission of the UCI; and
determining to transmit the UCI using automatic transmission of cancelled UCI based at least in part on determining that automatic transmission of cancelled UCI is configured for the UE and that the next uplink data communication or the next uplink control communication has sufficient resources for transmission of the UCI.

5. The method of claim 1, wherein determining whether the next uplink data communication or the next uplink control communication has sufficient resources for transmission of the UCI comprises:
determining that the next uplink data communication or the next uplink control communication does not have sufficient resources for transmission of the UCI; and
determining to transmit the UCI in response to the DCI based at least in part on determining that automatic transmission of cancelled UCI is configured for the UE and that the next uplink data communication or the next uplink control communication does not have sufficient resources for transmission of the UCI.

6. The method of any of claims 1-5, further comprising:
determining that a timer has expired based at least in part on determining to transmit the UCI in response to the DCI;
determining that the DCI has not been received prior to expiration of the timer; and
requesting the DCI based at least in part on determining that the DCI has not been received prior to expiration of the timer.

7. The method of claim 1, wherein determining whether the next uplink data communication or the next uplink control communication has sufficient resources for transmission of the UCI comprises:
determining that the next uplink data communication or the next uplink control communication does not have sufficient resources for transmission of the UCI; and
determining to transmit a portion of the UCI using automatic transmission of cancelled UCI based at least in part on determining that automatic transmission of cancelled UCI is configured for the UE and that the next uplink data communication or the next uplink control communication does not have sufficient resources for transmission of the UCI,
wherein a remaining portion of the UCI that is not transmitted in the next uplink data communication or the next uplink control communication is dropped or transmitted in a subsequent uplink communication.

8. The method of claim 1, wherein determining whether to transmit the UCI using automatic transmission of cancelled UCI or in response to the DCI comprises determining to transmit the UCI using automatic transmission of cancelled UCI; and
further comprising:
receiving the DCI prior to transmission of the UCI, wherein the DCI indicates a set of hybrid automatic repeat request, HARQ, bits to be transmitted in the UCI; and
wherein the set of HARQ bits indicated in the DCI are transmitted in the UCI, and wherein any HARQ bits not indicated in the DCI are excluded from the UCI.

9. The method of any of claims 1-8, wherein the UCI includes a set of hybrid automatic repeat request, HARQ, bits that all have a same priority.

10. A method for wireless communication performed by a network entity, the method comprising:
transmitting (410) a cancellation indication instructing a user equipment, UE, to cancel an uplink data communication, wherein the uplink data communication is to be multiplexed with uplink control information, UCI;
determining (425) whether the UE is to transmit the UCI using automatic transmission of cancelled UCI or in response to downlink control information, DCI, that instructs the UE to transmit cancelled UCI, wherein determining whether the UE is to transmit the UCI using automatic transmission of cancelled UCI or in response to the DCI comprises:
determining that automatic transmission of cancelled UCI is configured for the UE;
determining whether a next uplink data communication or a next uplink control communication associated with the UE has sufficient resources for transmission of the UCI; and
determining that the UE is to transmit the UCI using automatic transmission of cancelled UCI based at least in part on determining that automatic transmission of cancelled UCI is configured for the UE and the determination of whether the next uplink data communication or the next uplink control communication associated with the UE has sufficient resources for transmission of the UCI; and
monitoring (430) for the UCI based at least in part on the determination.

11. The method of claim 10, wherein determining whether the UE is to transmit the UCI using automatic transmission of cancelled UCI or in response to the DCI comprises determining that the UE is to transmit the UCI using automatic transmission of cancelled UCI; and
wherein monitoring for the UCI comprises monitoring for the UCI in a next uplink data communication or a next uplink control communication associated with the UE after cancelling the uplink data communication, based at least in part on determining that the UE is to transmit the UCI using automatic transmission of cancelled UCI.

12. The method of claim 10 or 11, further comprising:
receiving a request for the DCI; and
transmitting the DCI based at least in part on receiving the request.

13. The method of claim 10, wherein determining whether the UE is to transmit the UCI using automatic transmission of cancelled UCI or in response to the DCI comprises determining that the UE is to transmit the UCI using automatic transmission of cancelled UCI; and
further comprising:
transmitting the DCI prior to reception of the UCI, wherein the DCI indicates a set of hybrid automatic repeat request, HARQ, bits to be transmitted in the UCI; and
wherein the set of HARQ bits indicated in the DCI are received in the UCI, and wherein any HARQ bits not indicated in the DCI are excluded from the UCI.

14. An apparatus for a user equipment, UE, for wireless communication, the apparatus comprising:
means for canceling (415) an uplink data communication that is to be multiplexed with uplink control information, UCI;
means for determining (425) whether to transmit the UCI using automatic transmission of cancelled UCI or in response to downlink control information, DCI, that instructs the apparatus to transmit cancelled UCI, wherein the means for determining whether to transmit the UCI using automatic transmission of cancelled UCI or in response to the DCI comprises:
means for determining that automatic transmission of cancelled UCI is configured for the UE;
means for determining whether a next uplink data communication or a next uplink control communication has sufficient resources for transmission of the UCI; and
means for determining to transmit the UCI using automatic transmission of cancelled UCI based at least in part on determining that automatic transmission of cancelled UCI is configured for the UE and the determination of whether the next uplink data communication or the next uplink control communication has sufficient resources for transmission of the UCI; and
means for transmitting (430) the UCI based at least in part on the determination.

15. An apparatus for a network entity for wireless communication, the apparatus comprising:
means for transmitting (410) a cancellation indication instructing a user equipment, UE, to cancel an uplink data communication, wherein the uplink data communication is to be multiplexed with uplink control information, UCI;
means for determining (425) whether the UE is to transmit the UCI using automatic transmission of cancelled UCI or in response to downlink control information, DCI, that instructs the UE to transmit cancelled UCI, wherein the means for determining whether the UE is to transmit the UCI using automatic transmission of cancelled UCI or in response to the DCI comprises:
means for determining that automatic transmission of cancelled UCI is configured for the UE;
means for determining whether a next uplink data communication or a next uplink control communication associated with the UE has sufficient resources for transmission of the UCI; and
means for determining that the UE is to transmit the UCI using automatic transmission of cancelled UCI based at least in part on determining that automatic transmission of cancelled UCI is configured for the UE and the determination of whether the next uplink data communication or the next uplink control communication associated with the UE has sufficient resources for transmission of the UCI; and
means for monitoring (430) for the UCI based at least in part on the determination.

## Patentansprüche

1. Ein Verfahren zur von einem Benutzergerät, UE, ausgeführten drahtlosen Kommunikation, wobei das Verfahren Folgendes aufweist:
Annullieren (415) einer Uplink-Datenkommunikation, die mit Uplink-Steuerinformationen, UCI, gemultiplext werden soll;
Bestimmen (425), ob die UCI unter Verwendung einer automatischen Übermittlung annullierter UCI oder als Reaktion auf Downlink-Steuerinformationen, DCI, gesendet werden sollen, die das UE anweisen, annullierte UCI zu senden, wobei die Bestimmung, ob die UCI unter Verwendung der automatischen Übermittlung annullierter UCI oder als Reaktion auf die DCI gesendet werden sollen, Folgendes aufweist:
Bestimmen, dass eine automatische Übermittlung annullierter UCI für das UE konfiguriert ist;
Bestimmen, ob eine nächste Uplink-Datenkommunikation oder eine nächste Uplink-Steuerkommunikation über ausreichende Ressourcen für die Übermittlung der UCI verfügt; und
Bestimmen, die UCI unter Verwendung der automatischen Übermittlung annullierter UCI zu senden, zumindest teilweise basierend auf der Bestimmung, dass eine automatische Übermittlung annullierter UCI für das UE konfiguriert ist, und der Bestimmung, ob die nächste Uplink-Datenkommunikation oder die nächste Uplink-Steuerkommunikation über ausreichende Ressourcen für die Übermittlung der UCI verfügt; und
Senden (430) der UCI zumindest teilweise basierend auf der Bestimmung.

2. Verfahren nach Anspruch 1, wobei die Bestimmung, ob die UCI unter Verwendung der automatischen Übermittlung annullierter UCI oder als Reaktion auf die DCI gesendet werden sollen, die Bestimmung aufweist, die UCI unter Verwendung der automatischen Übermittlung annullierter UCI zu senden; und
wobei das Senden der UCI das Senden der UCI in einer nächsten Uplink-Datenkommunikation oder einer nächsten der Uplink-Steuerkommunikation nach dem Annullieren der Uplink-Datenkommunikation zumindest teilweise basierend auf der Bestimmung aufweist, die UCI unter Verwendung der automatischen Übermittlung annullierter UCI zu senden.

3. Verfahren nach Anspruch 1, wobei die Bestimmung, ob die UCI unter Verwendung der automatischen Übermittlung annullierter UCI oder als Reaktion auf die DCI gesendet werden sollen, die Bestimmung aufweist, die UCI als Reaktion auf die DCI zu senden; und
wobei das Senden der UCI das Senden der UCI entsprechend den Anweisungen in den DCI zumindest teilweise basierend auf der Bestimmung aufweist, die UCI als Reaktion auf die DCI zu senden.

4. Verfahren nach Anspruch 1, wobei die Bestimmung, ob die nächste Uplink-Datenkommunikation oder die nächste Uplink-Steuerkommunikation über ausreichende Ressourcen für die Übermittlung der UCI verfügt, Folgendes aufweist:
Bestimmen, dass die nächste Uplink-Datenkommunikation oder die nächste Uplink-Steuerkommunikation über ausreichende Ressourcen für die Übermittlung der UCI verfügt; und
Bestimmen, die UCI unter Verwendung der automatischen Übermittlung annullierter UCI zu senden, zumindest teilweise basierend auf der Bestimmung, dass eine automatische Übermittlung annullierter UCI für das UE konfiguriert ist und dass die nächste Uplink-Datenkommunikation oder die nächste Uplink-Steuerkommunikation über ausreichende Ressourcen für die Übermittlung der UCI verfügt.

5. Verfahren nach Anspruch 1, wobei die Bestimmung, ob die nächste Uplink-Datenkommunikation oder die nächste Uplink-Steuerkommunikation über ausreichende Ressourcen für die Übermittlung der UCI verfügt, Folgendes aufweist:
Bestimmen, dass die nächste Uplink-Datenkommunikation oder die nächste Uplink-Steuerkommunikation nicht über ausreichende Ressourcen für die Übermittlung der UCI verfügt; und
Bestimmen, die UCI als Reaktion auf die DCI zu senden, zumindest teilweise basierend auf der Bestimmung, dass eine automatische Übermittlung annullierter UCI für das UE konfiguriert ist und dass die nächste Uplink-Datenkommunikation oder die nächste Uplink-Steuerkommunikation nicht über ausreichende Ressourcen für die Übermittlung der UCI verfügt.

6. Verfahren nach einem der Ansprüche 1 - 5, das ferner Folgendes aufweist:
Bestimmen, dass ein Timer abgelaufen ist, zumindest teilweise basierend auf der Bestimmung, die UCI als Reaktion auf die DCI zu senden;
Bestimmen, dass die DCI nicht vor dem Ablauf des Timers empfangen wurden; und
Anfordern der DCI zumindest teilweise basierend auf der Bestimmung, dass die DCI nicht vor dem Ablauf des Timers empfangen wurden.

7. Verfahren nach Anspruch 1, wobei die Bestimmung, ob die nächste Uplink-Datenkommunikation oder die nächste Uplink-Steuerkommunikation über ausreichende Ressourcen für die Übermittlung der UCI verfügt, Folgendes aufweist:
Bestimmen, dass die nächste Uplink-Datenkommunikation oder die nächste Uplink-Steuerkommunikation nicht über ausreichende Ressourcen für die Übermittlung der UCI verfügt; und
Bestimmen, einen Teil der UCI unter Verwendung der automatischen Übermittlung annullierter UCI zu senden, zumindest teilweise basierend auf der Bestimmung, dass eine automatische Übermittlung annullierter UCI für das UE konfiguriert ist und dass die nächste Uplink-Datenkommunikation oder die nächste Uplink-Steuerkommunikation nicht über ausreichende Ressourcen für die Übermittlung der UCI verfügt,
wobei ein verbleibender Teil der UCI, der nicht in der nächsten Uplink-Datenkommunikation oder der nächsten Uplink-Steuerkommunikation gesendet wird, aufgegeben oder in einer nachfolgenden Uplink-Kommunikation gesendet wird.

8. Verfahren nach Anspruch 1, wobei die Bestimmung, ob die UCI unter Verwendung der automatischen Übermittlung annullierter UCI oder als Reaktion auf die DCI gesendet werden sollen, die Bestimmung aufweist, die UCI unter Verwendung der automatischen Übermittlung annullierter UCI zu senden; und
das ferner Folgendes aufweist:
Empfangen der DCI vor dem Senden der UCI, wobei die DCI einen in den UCI zu sendenden Satz hybrider automatischer Wiederholungsanforderungs-Bits, HARQ-Bits, angeben; und
wobei der in den DCI angegebene Satz von HARQ-Bits in den UCI gesendet wird, und wobei sämtliche nicht in den DCI angegebenen HARQ-Bits aus den UCI ausgeschlossen werden.

9. Verfahren nach einem der Ansprüche 1 - 8, wobei die UCI einen Satz hybrider automatischer Wiederholungsanforderungs-Bits, HARQ-Bits, einschließen, die alle eine gleiche Priorität aufweisen.

10. Ein Verfahren zur von einer Netzwerkentität ausgeführten drahtlosen Kommunikation, wobei das Verfahren Folgendes aufweist:
Senden (410) einer Annullierungsangabe, die ein Benutzergerät, UE, anweist, eine Uplink-Datenkommunikation zu annullieren, wobei die Uplink-Datenkommunikation mit Uplink-Steuerinformationen, UCI, gemultiplext werden soll;
Bestimmen (425), ob das UE die UCI unter Verwendung einer automatischen Übermittlung annullierter UCI oder als Reaktion auf Downlink-Steuerinformationen, DCI, senden soll, die das UE anweisen, annullierte UCI zu senden, wobei die Bestimmung, ob das UE die UCI unter Verwendung der automatischen Übermittlung annullierter UCI oder als Reaktion auf die DCI senden soll, Folgendes aufweist:
Bestimmen, dass eine automatische Übermittlung annullierter UCI für das UE konfiguriert ist;
Bestimmen, ob eine nächste Uplink-Datenkommunikation oder eine nächste Uplink-Steuerkommunikation, die dem UE zugeordnet ist, über ausreichende Ressourcen für die Übermittlung der UCI verfügt; und
Bestimmen, dass das UE die UCI unter Verwendung der automatischen Übermittlung annullierter UCI senden soll, zumindest teilweise basierend auf der Bestimmung, dass eine automatische Übermittlung annullierter UCI für das UE konfiguriert ist, und der Bestimmung, ob die nächste Uplink-Datenkommunikation oder die nächste Uplink-Steuerkommunikation, die dem UE zugeordnet ist, über ausreichende Ressourcen für die Übermittlung der UCI verfügt; und
Überwachen (430) auf die UCI zumindest teilweise basierend auf der Bestimmung.

11. Verfahren nach Anspruch 10, wobei die Bestimmung, ob das UE die UCI unter Verwendung der automatischen Übermittlung annullierter UCI oder als Reaktion auf die DCI senden soll, die Bestimmung aufweist, dass das UE die UCI unter Verwendung der automatischen Übermittlung annullierter UCI senden soll; und
wobei die Überwachung auf die UCI die Überwachung auf die UCI in einer nächsten Uplink-Datenkommunikation oder einer nächsten Uplink-Steuerkommunikation, die dem UE zugeordnet ist, nach der Annullierung der Uplink-Datenkommunikation zumindest teilweise basierend auf der Bestimmung aufweist, dass das UE die UCI unter Verwendung der automatischen Übermittlung annullierter UCI senden soll.

12. Verfahren nach Anspruch 10 oder 11, das ferner Folgendes aufweist:
Empfangen einer Anforderung der DCI; und
Senden der DCI zumindest teilweise basierend auf dem Empfang der Anforderung.

13. Verfahren nach Anspruch 10, wobei die Bestimmung, ob das UE die UCI unter Verwendung der automatischen Übermittlung annullierter UCI oder als Reaktion auf die DCI senden soll, die Bestimmung aufweist, dass das UE die UCI unter Verwendung der automatischen Übermittlung annullierter UCI senden soll; und
das ferner Folgendes aufweist:
Senden der DCI vor dem Empfang der UCI, wobei die DCI einen in den UCI zu sendenden Satz hybrider automatischer Wiederholungsanforderungs-Bits, HARQ-Bits, angeben; und
wobei der in den DCI angegebene Satz von HARQ-Bits in den UCI empfangen wird, und wobei sämtliche nicht in den DCI angegebenen HARQ-Bits aus den UCI ausgeschlossen werden.

14. Eine Vorrichtung für ein Benutzergerät, UE, zur drahtlosen Kommunikation, wobei die Vorrichtung Folgendes aufweist:
Mittel zum Annullieren (415) einer Uplink-Datenkommunikation, die mit Uplink-Steuerinformationen, UCI, gemultiplext werden soll;
Mittel zum Bestimmen (425), ob die UCI unter Verwendung einer automatischen Übermittlung annullierter UCI oder als Reaktion auf Downlink-Steuerinformationen, DCI, gesendet werden sollen, die die Vorrichtung anweisen, annullierte UCI zu senden, wobei die Mittel zur Bestimmung, ob die UCI unter Verwendung der automatischen Übermittlung annullierter UCI oder als Reaktion auf die DCI gesendet werden sollen, Folgendes aufweist:
Mittel zum Bestimmen, dass eine automatische Übermittlung annullierter UCI für das UE konfiguriert ist;
Mittel zum Bestimmen, ob eine nächste Uplink-Datenkommunikation oder eine nächste Uplink-Steuerkommunikation über ausreichende Ressourcen für die Übermittlung der UCI verfügt; und
Mittel zum Bestimmen, die UCI unter Verwendung der automatischen Übermittlung annullierter UCI zu senden, zumindest teilweise basierend auf der Bestimmung, dass eine automatische Übermittlung annullierter UCI für das UE konfiguriert ist, und der Bestimmung, ob die nächste Uplink-Datenkommunikation oder die nächste Uplink-Steuerkommunikation über ausreichende Ressourcen für die Übermittlung der UCI verfügt; und
Mittel zum Senden (430) der UCI zumindest teilweise basierend auf der Bestimmung.

15. Eine Vorrichtung für eine Netzwerkentität zur drahtlosen Kommunikation, wobei die Vorrichtung Folgendes aufweist:
Mittel zum Senden (410) einer Annullierungsangabe, die ein Benutzergerät, UE, anweist, eine Uplink-Datenkommunikation zu annullieren, wobei die Uplink-Datenkommunikation mit Uplink-Steuerinformationen, UCI, gemultiplext werden soll;
Mittel zum Bestimmen (425), ob das UE die UCI unter Verwendung einer automatischen Übermittlung annullierter UCI oder als Reaktion auf Downlink-Steuerinformationen, DCI, senden soll, die das UE anweisen, annullierte UCI zu senden, wobei die Mittel zur Bestimmung, ob das UE die UCI unter Verwendung der automatischen Übermittlung annullierter UCI oder als Reaktion auf die DCI senden soll, Folgendes aufweist:
Mittel zum Bestimmen, dass eine automatische Übermittlung annullierter UCI für das UE konfiguriert ist;
Mittel zum Bestimmen, ob eine nächste Uplink-Datenkommunikation oder eine nächste Uplink-Steuerkommunikation, die dem UE zugeordnet ist, über ausreichende Ressourcen für die Übermittlung der UCI verfügt; und
Mittel zum Bestimmen, dass das UE die UCI unter Verwendung der automatischen Übermittlung annullierter UCI senden soll, zumindest teilweise basierend auf der Bestimmung, dass eine automatische Übermittlung annullierter UCI für das UE konfiguriert ist, und der Bestimmung, ob die nächste Uplink-Datenkommunikation oder die nächste Uplink-Steuerkommunikation, die dem UE zugeordnet ist, über ausreichende Ressourcen für die Übermittlung der UCI verfügt; und
Mittel zum Überwachen (430) auf die UCI zumindest teilweise basierend auf der Bestimmung.

## Revendications

1. Un procédé de communication sans fil réalisé par un équipement utilisateur, UE, ledit procédé comprenant :
l'annulation (415) d'une communication de données en liaison montante devant être multiplexée avec une information de commande en liaison montante, UCI ;
la détermination (425) de la transmission ou non de l'UCI au moyen d'une transmission automatique d'UCI annulée ou en réponse à une information de commande en liaison descendante, DCI, qui ordonne à l'UE de transmettre une UCI annulée, la détermination de la transmission ou non de l'UCI au moyen d'une transmission automatique d'UCI annulée ou en réponse à la DCI comprenant :
la détermination que la transmission automatique d'UCI annulée est configurée pour l'UE ;
la détermination de la présence ou non de ressources suffisantes dans une communication de données suivante en liaison montante ou une communication de commande suivante en liaison montante pour la transmission de l'UCI ; et
la détermination de transmettre l'UCI au moyen de la transmission automatique d'UCI annulée sur la base, au moins en partie, de la détermination que la transmission automatique d'UCI annulée est configurée pour l'UE et
de la détermination de la présence ou non de ressources suffisantes dans la communication de données suivante en liaison montante ou la communication de commande suivante en liaison montante pour la transmission de l'UCI ; et
la transmission (430) de l'UCI sur la base, au moins en partie, de la détermination.

2. Le procédé selon la revendication 1, dans lequel la détermination de la transmission ou non de l'UCI au moyen d'une transmission automatique d'UCI annulée ou en réponse à la DCI comprend la détermination de transmettre l'UCI au moyen de la transmission automatique d'UCI annulée ; et
dans lequel la transmission de l'UCI comprend la transmission de l'UCI dans une communication de données suivante en liaison montante ou une communication de commande suivante en liaison montante après l'annulation de la communication de données en liaison montante, sur la base, au moins en partie, de la détermination de transmettre l'UCI au moyen de la transmission automatique d'UCI annulée.

3. Le procédé selon la revendication 1, dans lequel la détermination de la transmission ou non de l'UCI au moyen d'une transmission automatique d'UCI annulée ou en réponse à la DCI comprend la détermination de transmettre l'UCI en réponse à la DCI ; et
dans lequel la transmission de l'UCI comprend la transmission de l'UCI comme ordonné dans la DCI sur la base, au moins en partie, de la détermination de transmettre l'UCI en réponse à la DCI.

4. Le procédé selon la revendication 1, dans lequel la détermination de la présence ou non de ressources suffisantes dans la communication de données suivante en liaison montante ou la communication de commande suivante en liaison montante pour la transmission de l'UCI comprend :
la détermination que la communication de données suivante en liaison montante ou la communication de commande suivante en liaison montante dispose de ressources suffisantes pour la transmission de l'UCI ; et
la détermination de transmettre l'UCI au moyen de la transmission automatique d'UCI annulée sur la base, au moins en partie, de la détermination que la transmission automatique d'UCI annulée est configurée pour l'UE et que la communication de données suivante en liaison montante ou la communication de commande suivante en liaison montante dispose de ressources suffisantes pour la transmission de l'UCI.

5. Le procédé selon la revendication 1, dans lequel la détermination de la présence ou non de ressources suffisantes dans la communication de données suivante en liaison montante ou la communication de commande suivante en liaison montante pour la transmission de l'UCI comprend :
la détermination que la communication de données suivante en liaison montante ou la communication de commande suivante en liaison montante ne dispose pas de ressources suffisantes pour la transmission de l'UCI ; et
la détermination de transmettre l'UCI en réponse à la DCI sur la base, au moins en partie, de la détermination que la transmission automatique d'UCI annulée est configurée pour l'UE et que la communication de données suivante en liaison montante ou la communication de commande suivante en liaison montante ne dispose pas de ressources suffisantes pour la transmission de l'UCI.

6. Le procédé selon l'une quelconque des revendications 1 à 5, comprenant en outre :
la détermination qu'un temporisateur a expiré sur la base, au moins en partie, de la détermination de transmettre l'UCI en réponse à la DCI ;
la détermination que la DCI n'a pas été reçue avant l'expiration du temporisateur ; et
la demande de la DCI sur la base, au moins en partie, de la détermination que la DCI n'a pas été reçue avant l'expiration du temporisateur.

7. Le procédé selon la revendication 1, dans lequel la détermination de la présence ou non de ressources suffisantes dans la communication de données suivante en liaison montante ou la communication de commande suivante en liaison montante pour la transmission de l'UCI comprend :
la détermination que la communication de données suivante en liaison montante ou la communication de commande suivante en liaison montante ne dispose pas de ressources suffisantes pour la transmission de l'UCI ; et
la détermination de transmettre une partie de l'UCI au moyen de la transmission automatique d'UCI annulée sur la base, au moins en partie, de la détermination que la transmission automatique d'UCI annulée est configurée pour l'UE et que la communication de données suivante en liaison montante ou la communication de commande suivante en liaison montante ne dispose pas de ressources suffisantes pour la transmission de l'UCI,
dans lequel une partie restante de l'UCI qui n'est pas transmise dans la communication de données suivante en liaison montante ou la communication de commande suivante en liaison montante est abandonnée ou transmise dans une communication ultérieure en liaison montante.

8. Le procédé selon la revendication 1, dans lequel la détermination de la transmission ou non de l'UCI au moyen d'une transmission automatique d'UCI annulée ou en réponse à la DCI comprend la détermination de transmettre l'UCI au moyen de la transmission automatique d'UCI annulée ; et
comprenant en outre :
la réception de la DCI avant la transmission de l'UCI, la DCI indiquant un ensemble de bits de demande de répétition automatique hybride, HARQ, à transmettre dans l'UCI ; et
dans lequel l'ensemble de bits HARQ indiqué dans la DCI est transmis dans l'UCI, et dans lequel tout bit HARQ non indiqué dans la DCI est exclu de l'UCI.

9. Le procédé selon l'une quelconque des revendications 1 à 8, dans lequel l'UCI comprend un ensemble de bits de demande de répétition automatique hybride, HARQ, qui ont tous une même priorité.

10. Un procédé de communication sans fil réalisé par une entité de réseau, ledit procédé comprenant :
la transmission (410) d'une indication d'annulation ordonnant à un équipement utilisateur, UE, d'annuler une communication de données en liaison montante, dans lequel la communication de données en liaison montante doit être multiplexée avec une information de commande en liaison montante, UCI ;
la détermination (425) de la transmission ou non de l'UCI par l'UE au moyen d'une transmission automatique d'UCI annulée ou en réponse à une information de commande en liaison descendante, DCI, qui ordonne à l'UE de transmettre une UCI annulée, la détermination de la transmission ou non de l'UCI par l'UE au moyen d'une transmission automatique d'UCI annulée ou en réponse à la DCI comprenant :
la détermination que la transmission automatique d'UCI annulée est configurée pour l'UE ;
la détermination de la présence ou non de ressources suffisantes dans une communication de données suivante en liaison montante ou une communication de commande suivante en liaison montante associée à l'UE pour la transmission de l'UCI ; et
la détermination que l'UE doit transmettre l'UCI au moyen de la transmission automatique d'UCI annulée sur la base, au moins en partie, de la détermination que la transmission automatique d'UCI annulée est configurée pour l'UE et de la détermination de la présence ou non de ressources suffisantes dans la communication de données suivante en liaison montante ou la communication de commande suivante en liaison montante associée à l'UE pour la transmission de l'UCI ; et
la surveillance (430) de l'UCI sur la base, au moins en partie, de la détermination.

11. Le procédé selon la revendication 10, dans lequel la détermination de la transmission ou non de l'UCI par l'UE au moyen d'une transmission automatique d'UCI annulée ou en réponse à la DCI comprend la détermination que l'UE doit transmettre l'UCI au moyen de la transmission automatique d'UCI annulée ; et
dans lequel la surveillance de l'UCI comprend la surveillance de l'UCI dans une communication de données suivante en liaison montante ou une communication de commande suivante en liaison montante associée à l'UE après l'annulation de la communication de données en liaison montante, sur la base, au moins en partie, de la détermination que l'UE doit transmettre l'UCI au moyen de la transmission automatique d'UCI annulée.

12. Le procédé selon la revendication 10 ou 11, comprenant en outre :
la réception d'une demande de la DCI ; et
la transmission de la DCI sur la base, au moins en partie, de la réception de la demande.

13. Le procédé selon la revendication 10, dans lequel la détermination de la transmission ou non de l'UCI par l'UE au moyen d'une transmission automatique d'UCI annulée ou en réponse à la DCI comprend la détermination que l'UE doit transmettre l'UCI au moyen de la transmission automatique d'UCI annulée ; et
comprenant en outre :
la transmission de la DCI avant la réception de l'UCI, la DCI indiquant un ensemble de bits de demande de répétition automatique hybride, HARQ, à transmettre dans l'UCI ; et
dans lequel l'ensemble de bits HARQ indiqué dans la DCI est reçu dans l'UCI, et dans lequel tout bit HARQ non indiqué dans la DCI est exclu de l'UCI.

14. Un dispositif pour un équipement utilisateur, UE, pour la communication sans fil, ledit dispositif comprenant :
des moyens pour annuler (415) une communication de données en liaison montante devant être multiplexée avec une information de commande en liaison montante, UCI ;
des moyens pour déterminer (425) la transmission ou non de l'UCI au moyen d'une transmission automatique d'UCI annulée ou en réponse à une information de commande en liaison descendante, DCI, qui ordonne au dispositif de transmettre une UCI annulée, les moyens pour déterminer la transmission ou non de l'UCI au moyen d'une transmission automatique d'UCI annulée ou en réponse à la DCI comprenant :
des moyens pour déterminer que la transmission automatique d'UCI annulée est configurée pour l'UE ;
des moyens pour déterminer la présence ou non de ressources suffisantes dans une communication de données suivante en liaison montante ou une communication de commande suivante en liaison montante pour la transmission de l'UCI ; et
des moyens pour déterminer de transmettre l'UCI au moyen de la transmission automatique d'UCI annulée sur la base, au moins en partie, de la détermination que la transmission automatique d'UCI annulée est configurée pour l'UE et de la détermination de la présence ou non de ressources suffisantes dans la communication de données suivante en liaison montante ou la communication de commande suivante en liaison montante pour la transmission de l'UCI ; et
des moyens pour transmettre (430) l'UCI sur la base, au moins en partie, de la détermination.

15. Un dispositif pour une entité de réseau pour la communication sans fil, ledit dispositif comprenant :
des moyens pour transmettre (410) une indication d'annulation ordonnant à un équipement utilisateur, UE, d'annuler une communication de données en liaison montante, dans lequel la communication de données en liaison montante doit être multiplexée avec une information de commande en liaison montante, UCI ;
des moyens pour déterminer (425) la transmission ou non de l'UCI par l'UE au moyen d'une transmission automatique d'UCI annulée ou en réponse à une information de commande en liaison descendante, DCI, qui ordonne à l'UE de transmettre une UCI annulée, les moyens pour déterminer la transmission ou non de l'UCI par l'UE au moyen d'une transmission automatique d'UCI annulée ou en réponse à la DCI comprenant :
des moyens pour déterminer que la transmission automatique d'UCI annulée est configurée pour l'UE ;
des moyens pour déterminer la présence ou non de ressources suffisantes dans une communication de données suivante en liaison montante ou une communication de commande suivante en liaison montante associée à l'UE pour la transmission de l'UCI ; et
des moyens pour déterminer que l'UE doit transmettre l'UCI au moyen de la transmission automatique d'UCI annulée sur la base, au moins en partie, de la détermination que la transmission automatique d'UCI annulée est configurée pour l'UE et de la détermination de la présence ou non de ressources suffisantes dans la communication de données suivante en liaison montante ou la communication de commande suivante en liaison montante associée à l'UE pour la transmission de l'UCI ; et
des moyens pour surveiller (430) l'UCI sur la base, au moins en partie, de la détermination.
